Europäisches Patentamt

European Patent Office

Office européen des brevets

(19)

(11)     EP 0 923 970 B1

## (12)  FASCICULE DE BREVET EUROPEEN

(45) Date de publication et mention
de la délivrance du brevet:
**31.03.2004  Bulletin 2004/14**

(51) Int Cl.⁷: **B01D 15/02**

(21) Numéro de dépôt: **98403071.8**

(22) Date de dépôt: **07.12.1998**

(54) **Procédé et dispositif d'amélioration de la pureté d'un produit en lit mobile simulé**

Verfahren und Vorrichtung zur Verbesserung der Reinheit eines Produktes durch ein simuliertes Wanderbett

Process and device for improving the purity of a product in a simulated moving bed

(84) Etats contractants désignés:
**BE DE ES FR GB IT NL**

(30) Priorité: **22.12.1997  FR 9716273**

(43) Date de publication de la demande:
**23.06.1999  Bulletin 1999/25**

(73) Titulaire: **Institut Français du Pétrole
92852 Rueil-Malmaison Cedex (FR)**

(72) Inventeurs:
• **Hotier, Gérard
69630 Chaponost (FR)**

• **Renard, Pierre
78860 Saint Nom la Breteche (FR)**
• **Pucci, Annick
78290 Croissy sur Seine (FR)**
• **Pavone, Didier
69130 Ecully (FR)**

(56) Documents cités:
**EP-A- 0 769 316         US-A- 2 985 589
US-A- 3 268 605**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un dispositif pour améliorer la pureté d'au moins un constituant dans un mélange circulant à travers un adsorbant solide ou un catalyseur solide ainsi que le procédé permettant son fonctionnement.

Elle concerne particulièrement un procédé de séparation chromatographique d'au moins un isomère aromatique à 8 atomes de carbone en lit mobile simulé dans un mélange de xylènes et d'éthylbenzène en contenant, et de préférence de paraxylène, en vue de la synthèse d'acide téréphtalique, un intermédiaire pétrochimi.que dans la fabrication des textiles.

Plus généralement, elle concerne la séparation d'au moins un isomère dans un mélange de constituants contenant au moins un groupement aryl sur lequel est attaché au moins un groupement alkyl.

Enfin, elle concerne la séparation d'au moins un constituant dans un mélange pour lequel on met en oeuvre toute séparation chromatographique d'adsorption ou d'échange d'ions par exemple.

Les réacteurs ou adsorbeurs utilisés de nos jours sont de plus en plus volumineux pour traiter une demande en produit recherché de plus en plus grande.

Par ailleurs, le produit recherché doit atteindre une pureté dépassant 99,5 % qui n'est pas a priori compatible avec le volume de la charge à traiter et donc avec de très grandes capacités de réacteur.

L'arrière plan technologique illustrant la mise en oeuvre d'un dispositif d'adsorption à contre-courant simulé est décrit dans le brevet US 2 985 589 ou US 3 268 605.

Ce dispositif comprend au moins une colonne cylindrique contenant une masse de solide globalement cylindrique et de section sensiblement annulaire.

Un fluide principal introduit par une pompe s'écoule à travers le lit de solide le long de l'axe central de la colonne, selon un écoulement que l'on souhaite qualifier d'écoulement de type piston (plug flow). En d'autres termes, le fluide doit avoir une composition et un front d'écoulement uniformes en tous points de la section de la colonne.

Un dispositif comme celui décrit dans les brevets US 3 214 247 et US 4 378 292 permet d'atteindre cet objectif. Il comprend généralement une pluralité de lits d'un adsorbant, alimentés par une pluralité de plateaux distributeurs, chaque lit étant supporté par une grille supérieure sensiblement perpendiculaire à l'axe du réacteur, et permettant l'écoulement du fluide. Chaque plateau est divisé en secteurs et chaque segment de plateau distributeur comporte deux déflecteurs non perforés, plats ou globalement effilés (d'épaisseur variable) disposés sur un même plan horizontal, entre lesquels on dispose un espace de circulation du fluide. Une grille inférieure sous les déflecteurs permet de répartir uniformément le fluide dans le lit inférieur d'adsorbant.

Au niveau de chaque plateau de distribution, au moins quatre lignes de transfert de fluides secondaires (ligne d'injection de charge, ligne d'injection de désorbant, ligne de soutirage d'un extrait et ligne de soutirage d'un raffinat) comprenant un jeu de vannes sont connectés à des moyens de permutation de ce jeu de vannes.

Les injections et soutirages de ces fluides sont réalisés entre certains lits qui définissent des zones et l'on déplace à espace de temps régulier appelé période T les points d'introduction et de soutirage délimitant les zones de l'intervalle entre les lits $(c_k)$ et $(c_{k+1})$ à l'intervalle entre les lits $(c_{k+1})$ et $(c_{k+2})$.

Si n est le nombre de lits, n x T définit le temps de cycle.

Une pompe de recyclage recycle le fluide de l'extrémité basse de la colonne vers l'extrémité haute de la colonne.

Les fluides secondaires (charge ou désorbant) sont introduits ou soutirés (extrait, raffinat) dans ou depuis l'espace de circulation par l'intermédiaire d'une chambre d'introduction ou de soutirage percée d'orifices.

Chaque plateau distributeur peut être divisé en secteurs. Selon le brevet US 3 789 989, chaque secteur de plateau, délimité par des parois radiales, comporte une chambre d'introduction ou de soutirage du fluide secondaire.

Dans le cas où le plateau distributeur de chaque secteur ne comporte qu'une seule chambre, chaque chambre d'un secteur donné est connectée par un conduit à une ligne unique d'alimentation ou de soutirage reliée à l'extérieur de la colonne.

Selon la demande de brevet EP-A-769316, chaque fluide secondaire est introduit ou soutiré au moyen de sa propre chambre d'introduction ou de soutirage qui dispose d'une pluralité d'orifices en regard de l'espace de circulation. Les parois supérieure et inférieure de ces chambres constituent les déflecteurs mentionnés précédemment. Donc, lorsque le plateau distributeur de chaque secteur comporte plusieurs chambres, chaque chambre d'un secteur de lit est connectée par un conduit à une ligne destinée à ne recevoir qu'un seul fluide soit pour alimenter la chambre appropriée au désorbant ou en charge soit pour soutirer de la chambre appropriée le raffinat ou l'extrait. Ainsi, par exemple, si chaque secteur comporte quatre chambres, une destinée à la charge, la deuxième au désorbant, la troisième au raffinat et la quatrième à l'extrait, la chambre CF du secteur déterminé recevant la charge F sera reliée à une ligne recevant tous les conduits des différentes chambres CF relatives à un même lit d'adsorbant.

Dans une unité de séparation de paraxylène fonctionnant en lit mobile simulé, et comportant deux adsorbeurs disposés en série de douze lits de tamis moléculaire chacun, on a constaté une déformation (ou traînée) des profils de concentration longitudinale se traduisant par un manque de performance par rapport à la performance idéale espérée.

En particulier, la traînée de la concentration en impuretés au niveau du soutirage de l'extrait se traduit par une baisse significative de la pureté de l'extrait (inférieure à 99%) par rapport à la pureté espérée (supérieure à 99,5%).

L'analyse du problème effectuée sur l'unité de séparation a montré que ces déformations (ou traînées) des profils de concentration longitudinale étaient dues à des circulations parasites à travers chacune des chambres de distribution disposées sur les secteurs de chaque plateau et ceci pendant les périodes où il n'y a ni introduction ni soutirage de fluide à travers la chambre concernée.

Il s'agit en particulier de pleurage, c'est-à-dire d'échange de matière dû à des turbulences au niveau des orifices des chambres de distribution entre le fluide principal qui circule dans l'espace de circulation et le fluide contenu dans les chambres. Ce phénomène est connu pour engendrer des faibles traînées.

Il s'agit également surtout de recirculation d'une chambre de distribution d'un secteur de plateau vers la chambre similaire d'un autre secteur du même plateau, via la tuyauterie d'interconnexion reliant ces chambres entre elles et à la ligne de transfert vers l'extérieur de l'adsorbeur.

Cette recirculation est due aux faibles différences de pression existant entre les secteurs d'un même plateau. En théorie, cette pression devrait être la même partout sur un même plateau. En pratique, de faibles différences existent en raison d'imperfections diverses comme les imperfections d'écoulement du fluide principal à travers les lits d'adsorbant, et ceci induit, pendant les périodes où il n'y a ni introduction, ni soutirage de fluide secondaire dans une chambre, une recirculation d'une partie du fluide principal prélevé au niveau de l'espace de circulation d'un secteur où la pression est plus élevée, vers l'espace de circulation d'un secteur où la pression est plus basse et ceci via les orifices des chambres concernées.

La partie de fluide principal recirculé entre dans une des chambres en traversant les orifices de la chambre concernée appartenant au secteur de pression plus élevée.

Cette partie de fluide chemine ensuite vers la chambre similaire appartenant au secteur de pression moins élevée via la tuyauterie d'interconnexion reliant ces chambres entre elles.

Enfin, cette partie de fluide rejoint le fluide principal dans l'espace de circulation du secteur de pression moins élevée, en traversant les orifices de la chambre de ce secteur.

Le débit de recirculation entre deux secteurs d'un même plateau est fonction des différences de pressions existantes entre ces deux secteurs, ainsi que de la taille des orifices des chambres des secteurs concernés.

Le temps de résidence du fluide recirculant ainsi d'une chambre d'un secteur vers la chambre correspondante d'un autre secteur est lui-même fonction du volume des chambres de départ et d'arrivée, du volume de tuyauterie qui les connecte et du débit de recirculation entre ces chambres.

Si le plateau comporte de multiples secteurs il y aura une recirculation générale combinée depuis les secteurs où la pression est la plus élevée vers les secteurs où la pression est la moins élevée, cette recirculation s'effectuant avec un temps de résidence global moyen TR.

Dans cette unité fonctionnant en lit mobile simulé, la composition du fluide principal au niveau d'un plateau évolue constamment en fonction du temps. Ceci est dû à l'avancement du profil de concentration longitudinale qui se déplace sous l'action de la circulation du fluide principal.

Compte tenu de la recirculation parasite observée, il s'ensuit que sur un plateau pris à un instant donné, il arrive d'une part, le fluide principal qui a une composition donnée, et d'autre part, la partie du fluide principal recirculé depuis une partie des secteurs vers les autres secteurs de ce même plateau, qui a une composition correspondant à celle que le fluide principal avait un moment auparavant, le décalage de temps étant égal au temps de résidence TR de la partie de fluide recirculée.

Tout se passe donc comme si une partie du fluide principal arrivait sur chaque plateau avec un certain retard égal au temps de résidence TR.

Le mélange de cette partie de fluide recirculé avec retard, avec le fluide principal modifie la composition globale du fluide combiné et provoque donc un rétromélange systématique au niveau de chaque plateau. Ceci induit une déformation, ou trainée, des profils de concentration longitudinale, et se traduit par une perte de performance telle que la baisse de pureté de l'extrait qui peut atteindre, par exemple, jusqu'à un point.

Pour éviter ce problème, on pourrait envisager la suppression de la circulation des fluides dans les chambres par des clapets anti-retour disposés sur les lignes d'accès aux chambres mais cette solution s'avère impraticable puisque le fluide dans le cas d'une chambre unique peut circuler dans un sens ou dans l'autre. De plus, ces clapets peuvent poser des problèmes de maintenance insolubles en raison de leur inaccessibilité.

L'objet de l'invention est de remédier aux inconvénients de l'art antérieur.

Un autre objet est d'améliorer la pureté du produit recherché et notamment dans le cas de réacteurs ou adsorbeurs de très grand diamètre.

Plus précisément, l'invention concerne un procédé de séparation chromatographique d'une charge dans un dispositif en lit mobile simulé comprenant une pluralité de lits (A1 à An) d'un solide ou adsorbant, contenus dans au moins une colonne chromatographique, un plateau distributeur de fluide entre chaque lit, chaque plateau distributeur étant divisé en une pluralité de secteurs, chaque secteur de plateau distributeur comprenant au moins une chambre de distribution percée d'orifices et un espace de circulation de fluide au voisinage des dits orifices de la chambre, la dite chambre étant connectée à une ligne de transfert s'étendant entre la chambre et un point situé à l'extérieur de la colonne, on effectue durant une période T du cycle, une injection de la charge, un soutirage d'un raffinat, une injection de désorbant et un soutirage d'un extrait dans et depuis une chambre de distribution appartenant à des plateaux différents, le procédé étant caractérisé en ce qu'on fait circuler en permanence à un débit approprié un volume de fluide circulant dans la colonne dans une ligne de dérivation reliant les chambres d'un plateau distributeur $P_i$ vers les chambres d'un autre plateau distributeur en aval $P_{i+j}$, distant d'au moins un lit, pendant au moins une période T du cycle, la période T correspondant au temps de circulation du fluide dans un lit de solide, lesdites chambres de distribution ne recevant pendant la dite période ni l'injection de charge ou de désorbant ni le soutirage d'un raffinat ou d'un extrait, le débit de fluide circulant dans la ligne de dérivation et dans les chambres étant ajusté de telle façon qu'on balaie les dites chambres de circulation par un fluide ayant sensiblement la même composition que celle du fluide circulant à travers l'espace de circulation au niveau de chacune des chambres des plateaux Pi et Pi+j.

La position du plateau situé en aval est définie par rapport à la direction de l'avancement des points de soutirage et d'introduction lors des séquences de permutations.

En opérant selon le procédé, on évite toute stagnation de fluide résiduel dans les chambres de distribution. La chambre de distribution de laquelle du fluide (le fluide principal dit pump around) est aspiré, voit circuler un fluide dont la composition est sensiblement celle du fluide qui traverse au même instant l'espace de circulation dans le plateau distributeur qui relie un lit d'adsorbant à un autre lit d'adsorbant.

De même, la chambre de circulation dans laquelle du fluide est introduit via la ligne de dérivation voit circuler un fluide dont la composition est sensiblement celle qui traverse au même instant le dit espace de circulation.

On a observé dans ces conditions que l'on obtenait une pureté au niveau du produit recherché, par exemple du paraxylène, très intéressante (plus de 99,8%) et un rendement supérieur à 95%, de manière simple et avec suppression de la perturbation affectant le profil de concentrations s'écoulant dans les lits d'adsorbant.

On a par ailleurs observé qu'il n'était plus nécessaire de rincer le fluide résiduel stagnant avant l'opération de soutirage de l'extrait, dans la mesure où le procédé selon l'invention assure un rinçage permanent des lignes. On évite alors d'introduire une ou deux zones supplémentaires et donc des lignes et des vannes supplémentaires et en même temps on évite une diminution de la productivité en produit recherché.

Selon une caractéristique du procédé, les chambres de plateaux distributeurs reliées par la ligne de dérivation peuvent être séparées par un lit d'adsorbant. Dans ce cas, le débit de fluide circulant dans la ligne de dérivation est habituellement sensiblement le quotient du volume disponible dans les chambres de distribution concernées et la ligne de dérivation entre les parties de lignes de transfert entre deux plateaux successifs de chambres, divisé par la période du cycle.

On pourra vérifier que ce débit est supérieur au débit de circulation naturelle du fluide due aux faibles différences de pression (par exemple quelques grammes par $cm^2$) existant entre les mêmes chambres de secteurs d'un même plateau.

Selon une autre caractéristique, elles peuvent être séparées par deux lits d'adsorbant, la ligne de dérivation étant connectée entre le plateau $P_i$ et le plateau $P_{i+2}$, en aval. Dans ce cas précis, le débit de fluide est diminué puisqu'on prend en compte la longueur de la ligne de dérivation et surtout la durée de circulation correspondant à deux périodes.

En faisant circuler le fluide entre deux plateaux distants de deux lits, on dispose de plus d'une perte de charge plus élevée qui impose avec plus de sécurité le sens de circulation du fluide dans la ligne de dérivation.

Des moyens de contrôle et d'ajustement du débit de fluide circulant dans les chambres et la ligne de dérivation sont disposés sur celle-ci. Ceux-ci peuvent comprendre une ligne calibrée en fonction des volumes mis en jeu par la dérivation entre deux lits et en fonction du temps de circulation du fluide pour obtenir le débit approprié.

Un clapet anti-retour disposé sur cette ligne de dérivation en aval des dits moyens interdit tout retour de liquide vers l'amont.

Une vanne tout ou rien disposée sur la ligne de dérivation peut par ailleurs interdire toute circulation de fluide dans un sens ou dans l'autre.

Une pompe reliant les deux chambres et disposée sur la dite ligne en amont de ces moyens de contrôle et d'ajustement peut faciliter la circulation du fluide dans cette ligne.

On peut accepter une tolérance de ± 50 % autour de la valeur calculée du débit, notamment en l'absence d'un asservissement automatique du contrôle de débit, avantageusement ± 25 % et de préférence ± 15 %, sans que les performances, c'est-à-dire la pureté du produit recherché, exprimées en fonction du débit de fluide de dérivation ne soient substantiellement affectées.

Le plateau distributeur peut ne comporter qu'une seule chambre de distribution par secteur. Selon une première variante du procédé, on peut annuler, pendant une période le débit du fluide circulant dans la ligne de dérivation entre les plateaux de distribution (Pi et Pi+1), lorsque les chambres concernées du plateau distributeur Pi reçoivent l'injection de charge ou de désorbant ou de tout autre fluide (flush-in de rinçage) ou le soutirage de raffinat ou d'extrait ou de tout autre fluide (flush out).

Selon une deuxième variante du procédé, durant la période de soutirage d'un extrait ou d'un raffinat, sur un plateau distributeur donné ne comportant qu'une seule chambre par secteur, on soutire l'extrait ou le raffinat du plateau $P_i$, le débit de dérivation étant annulé (par le clapet anti-retour) et durant la période suivante, on soutire de l'extrait ou du raffinat du plateau $P_{i+1}$ et du plateau $P_i$, la circulation de fluide dans la ligne de dérivation étant rétablie.

Durant la période d'injection de charge ou de désorbant, on peut introduire une partie de la charge ou du désorbant dans un plateau approprié $P_i$ via la ligne de dérivation et durant la période suivante, on envoie la totalité de la charge dans le plateau distributeur suivant $P_{i+1}$, le débit de dérivation étant annulé (par le clapet anti-retour).

Le plateau distributeur peut comporter par secteur deux, trois ou quatre chambres de distribution, avantageusement deux, car le débit de fluide circulant dans tous les lits d'une même zone est sensiblement maintenu constant.

Dans le cas où il en comporte deux, selon une première variante, une première chambre peut être destinée à recevoir un soutirage d'extrait ou de raffinat et une seconde destinée à recevoir une introduction de charge ou de désorbant. Selon une seconde variante d'un plateau distributeur à deux chambres par secteur, une première chambre peut être destinée à recevoir un soutirage de raffinat ou une introduction de désorbant et une deuxième chambre peut être destinée à recevoir un soutirage d'extrait ou une introduction de charge. Un fluide de lavage (reflux interne de produit recherché, paraxylène par exemple) en provenance de l'extérieur peut aussi être introduit dans ladite deuxième chambre.

En dehors des périodes de soutirage d'extrait et de raffinat et d'introduction de charge et de désorbant sur les dites chambres, on soutire le fluide des premières chambres d'un plateau distributeur $P_i$ pour l'introduire, grâce à la ligne de dérivation, dans les deuxièmes chambres du plateau distributeur $P_{i+1}$.

Selon la première variante, pendant la période de soutirage de l'extrait ou du raffinat, on peut soutirer de l'extrait ou du raffinat des premières chambres, d'un plateau $P_i$, on annule le débit de la ligne de dérivation alimentant les deuxièmes chambres du plateau $P_{i+1}$ et on introduit dans les deuxièmes chambres du plateau $P_i$ du fluide provenant des premières chambres du plateau $P_{i-1}$ via la ligne de dérivation.

Selon la deuxième variante, pendant la période de soutirage du raffinat, on peut soutirer du raffinat des premières chambres d'un plateau $P_i$, on annule le débit de la ligne de dérivation alimentant les deuxièmes chambres du plateau $P_{i+1}$ et on introduit dans les deuxièmes chambres du plateau $P_i$ du fluide provenant des premières chambres du plateau $P_{i-1}$ via la ligne de dérivation.

Pendant la période de soutirage de l'extrait, on peut soutirer de l'extrait des deuxièmes chambres d'un plateau $P_i$, on annule le débit de la ligne de dérivation alimentant les deuxièmes chambres du plateau Pi et on introduit dans les deuxièmes chambres du plateau $P_{i+1}$ du fluide provenant des premières chambres du plateau $P_i$ via la ligne de dérivation.

Pendant la période d'introduction de désorbant, on peut introduire le désorbant dans les premières chambres d'un plateau $P_i$, on annule le débit de la ligne de dérivation alimentant les deuxièmes chambres du plateau $P_{i+1}$ et on introduit dans les deuxièmes chambres du plateau $P_i$ du fluide provenant des premières chambres du plateau $P_{i-1}$ via la ligne de dérivation correspondante.

Pendant la période d'introduction de charge, on peut introduire la charge dans les deuxièmes chambres d'un plateau $P_i$, on annule le débit de la ligne de dérivation alimentant les deuxièmes chambres du plateau $P_i$ et on soutire le fluide des premières chambres du plateau $P_i$ pour l'introduire grâce à la ligne de dérivation correspondante dans les deuxièmes chambres du plateau $P_{i+1}$.

Selon une troisième variante d'un plateau distributeur à deux chambres par secteur, une première destinée à recevoir un soutirage d'extrait, une seconde destinée à recevoir une introduction de charge ou de désorbant ou un soutirage de raffinat, en dehors des périodes de soutirage d'extrait et de raffinat et d'introduction de charge et de désorbant sur les dites chambres, on peut soutirer le fluide des premières chambres d'un plateau distributeur $P_i$ pour l'introduire grâce à la ligne de dérivation, dans les deuxièmes chambres du plateau distributeur $P_{i+1}$.

Pendant une période du cycle, on peut soutirer de l'extrait des premières chambres d'un plateau $P_i$, on annule le débit de la ligne de dérivation alimentant les deuxièmes chambres du plateau $P_{i+1}$ et on introduit dans les deuxièmes chambres du plateau $P_i$ du fluide provenant des premières chambres du plateau $P_{i-1}$ via la ligne de dérivation.

Pendant une période du cycle, on peut soutirer du raffinat des deuxièmes chambres d'un plateau $P_i$, on soutire éventuellement du fluide des premières chambres du plateau $P_{i-1}$, via la ligne de dérivation entre les plateaux $P_{i-1}$ et $P_i$ et on introduit du fluide provenant des premières chambres du plateau $P_i$ dans les deuxièmes chambres du plateau $P_{i+1}$ via la ligne de dérivation entre les plateaux $P_i$ et $P_{i+1}$.

Si la vanne tout ou rien sur la ligne de dérivation entre le plateau $P_{i-1}$ et $P_i$ est fermée, on annule le soutirage du fluide en provenance des premières chambres du plateau $P_{i-1}$.

Pendant une période du cycle relative aux première et troisième variantes, on peut introduire de l'extérieur de la colonne de la charge ou du désorbant dans les deuxièmes chambres d'un plateau $P_i$, on annule le

débit de fluide de la ligne de dérivation alimentant les deuxièmes chambres du plateau $P_i$, et on soutire des premières chambres du plateau $P_i$ du fluide que l'on introduit dans les deuxièmes chambres du plateau $P_{i+1}$ via la ligne de dérivation.

Lorsque le plateau distributeur comprend quatre chambres de distribution par secteur, une première destinée à recevoir un soutirage d'extrait, une deuxième destinée à recevoir un soutirage de raffinat, une troisième destinée à recevoir une introduction de désorbant et une quatrième destinée à recevoir une introduction de charge, on peut soutirer le fluide des premières chambres et des deuxièmes chambres d'un plateau distributeur $P_i$ pour l'introduire respectivement dans les troisièmes et les quatrièmes chambres du plateau $P_{i+1}$ en dehors des périodes de soutirage d'extrait ou de raffinat et d'introduction de désorbant ou de charge sur le dit plateau $P_i$.

Durant une période du cycle, on peut soutirer de l'extrait des premières chambres d'un plateau $P_i$, on annule le débit de fluide de la ligne de dérivation alimentant les troisièmes chambres du plateau $P_{i+1}$, les troisièmes et les quatrièmes chambres du plateau $P_i$ recevant respectivement du fluide des premières et des deuxièmes chambres du plateau précédent $P_{i-1}$ via la ligne de dérivation et les deuxièmes chambres du plateau $P_i$ recevant du fluide alimentant les quatrièmes chambres du plateau $P_{i+1}$ via la ligne de dérivation correspondante.

Durant une période du cycle, on peut soutirer du raffinat des deuxièmes chambres d'un plateau distributeur $P_i$, on annule le débit de fluide de la ligne de dérivation alimentant les quatrièmes chambres du plateau $P_{i+1}$, les troisièmes et les quatrièmes chambres du plateau $P_i$ recevant respectivement du fluide des premières et des deuxièmes chambres du plateau précédent $P_{i-1}$, via la ligne de dérivation et les premières chambres du plateau $P_i$ recevant du fluide alimentant les troisièmes chambres du plateau suivant $P_{i+1}$ via la ligne de dérivation correspondante.

Durant une période du cycle, on peut introduire de l'extérieur de la colonne, du désorbant dans les troisièmes chambres d'un plateau $P_i$, on annule le débit de fluide de la ligne de dérivation alimentant les troisièmes chambres du plateau $P_i$, les premières et deuxièmes chambres du plateau $P_i$ recevant du fluide alimentant respectivement les troisièmes et quatrièmes chambres du plateau $P_{i+1}$ via la ligne de dérivation et les quatrièmes chambres du plateau suivant $P_i$ recevant du fluide des deuxièmes chambres du plateau précédent $P_{i-1}$ via la ligne de dérivation correspondante.

Durant une période du cycle, on peut introduire de l'extérieur de la colonne, de la charge dans les quatrièmes chambres d'un plateau $P_i$, on annule le débit de fluide de la ligne de dérivation alimentant les quatrièmes chambres, les premières et deuxièmes chambres du plateau distributeur $P_i$ alimentant respectivement les troisièmes et quatrièmes chambres du plateau suivant $P_{i+1}$ via la ligne de dérivation et les troisièmes chambres du plateau $P_i$ recevant du fluide des premières chambres du plateau $P_{i-1}$ via la ligne de dérivation.

L'invention concerne aussi le dispositif pour la mise en oeuvre du procédé. Plus précisément, elle concerne un dispositif de séparation chromatographique d'une charge en lit mobile simulé comprenant au moins une colonne remplie d'un solide ou d'adsorbant, la colonne comprenant une pluralité de lits, un plateau distributeur $P_i$ de fluide entre chaque lit, chaque plateau distributeur étant divisé en une pluralité de secteurs de plateaux distributeurs, chaque secteur de plateau distributeur comprenant au moins une chambre de distribution percée d'orifices et un espace de circulation de fluide au voisinage des dits orifices de la chambre, la dite chambre étant connectée à une ligne de transfert s'étendant entre la chambre et un point situé à l'extérieur de la colonne, le dispositif étant caractérisé en ce que la ligne de transfert relative aux chambres de distribution d'un plateau Pi est reliée par une ligne de dérivation (bypass) à la ligne de transfert relative aux chambres de distribution d'un autre plateau Pi+j disposé en aval (par rapport au sens d'avancement des permutations des lignes de transfert) et en ce que la ligne de dérivation comporte des moyens de contrôle et d'ajustement du débit de fluide y circulant, de telle sorte que les chambres de distribution soient balayées par un fluide qui a sensiblement la même composition que celle du fluide circulant à travers l'espace de circulation au niveau de chacune des chambres.

Les moyens de contrôle et d'ajustement du débit de fluide comportent en général un clapet anti-retour ou tout autre moyen équivalent.

Ces moyens comprennent un moyen de mesure de débit de fluide circulant dans la ligne de dérivation et une vanne de réglage de débit, éventuellement asservie au moyen de mesure du débit.

La ligne de dérivation peut par ailleurs comprendre une pompe, généralement . disposée en amont du moyen de mesure du débit. Elle peut comprendre aussi une vanne tout ou rien, y interdisant toute circulation de fluide pendant les périodes d'injection ou de soutirage dans ou de la colonne.

Selon un premier mode de réalisation du dispositif, chaque secteur de plateau distributeur peut comporter une chambre, le nombre de lits dans la colonne étant pair et le nombre de plateaux distributeurs $P_n$ étant impair, la ligne de dérivation ($L_{1,2}$) relie les chambres de distribution du plateau distributeur $P_1$ à celles du plateau distributeur $P_2$ en aval de $P_1$ la ligne de dérivation ($L_{3,4}$) relie les chambres de distribution du plateau distributeur $P_3$ à celles du plateau distributeur $P_4$ en aval de $P_3$ et la ligne de dérivation ($L_n$) relie les chambres de distribution du plateau distributeur $P_n$ à la ligne de recyclage du fluide principal du dernier lit vers le premier lit.

Selon une autre variante, le nombre de lits étant pair, le nombre de plateaux distributeurs $P_n$ étant impair, une ligne de dérivation relie la ligne de recyclage du fluide principal aux chambres de distribution du plateau distributeur $P_1$, la ligne de dérivation $L_{2,3}$ relie les chambres de distribution du plateau distributeur $P_2$ à celles du plateau distributeur $P_3$, en aval de $P_2$ et la ligne de dérivation ($L_{n-1,n}$) relie les chambres de distribution du plateau distributeur $P_{n-1}$ à celles du plateau distributeur $P_n$ en aval de $P_{n-1}$.

Selon une autre variante, le nombre de lits étant impair, le nombre de plateaux distributeurs $P_n$ étant pair, la ligne de dérivation ($L_{1,2}$) relie les chambres de distribution du plateau distributeur $P_1$ à celles du plateau distributeur $P_2$, en aval de $P_1$ la ligne de dérivation ($L_{3,4}$) relie les chambres de distribution du plateau distributeur $P_3$ à celles du plateau distributeur $P_4$ en aval de $P_3$ et la ligne de dérivation ($L_{n-1,n}$) relie les chambres de distribution du plateau distributeur $P_{n-1}$ à celles du plateau distributeur $P_n$ en aval de $P_{n-1}$.

Il peut être avantageux que la ligne de dérivation relie les chambres d'un plateau $P_i$ à celles d'un plateau $P_{i+2}$. Dans ce cas, les chambres du plateau $P_1$ peuvent être reliées à celles du plateau $P_2$ par la ligne de dérivation, ou bien les chambres du plateau $P_{n-1}$ peuvent être reliées à celles du plateau $P_n$ par la ligne de dérivation.

Selon un deuxième mode avantageux de réalisation de dispositif, chaque secteur de plateau distributeur $P_i$ de la colonne peut comprendre deux chambres de distribution de fluide, une première adaptée à recevoir un premier fluide, une seconde adaptée à recevoir un second fluide et une première ligne de dérivation relie les premières chambres d'un plateau $P_i$ aux deuxièmes chambres d'un plateau $P_{i+1}$ et une seconde ligne de dérivation relie les premières chambres du plateau $P_{i+1}$ aux deuxièmes chambres du plateau $P_{i+2}$ et ainsi de suite.

Selon une autre variante, lorsque le plateau distributeur $P_i$ comprend par secteur deux chambres de distribution de fluide, une première adaptée à recevoir un premier fluide et une seconde adaptée à recevoir un second fluide, une première ligne de dérivation peut relier les premières chambres d'un plateau $P_i$ aux premières chambres d'un plateau $P_{i+1}$ et une seconde ligne de dérivation relie les deuxièmes chambres du plateau $P_i$ aux deuxièmes chambres du plateau $P_{i+1}$.

Selon un troisième mode de réalisation du dispositif, chaque secteur de plateau distributeur $P_i$ de la colonne peut comprendre quatre chambres de distribution de fluide, une première adaptée à recevoir un premier fluide (extrait), une seconde adaptée à recevoir un second fluide (raffinat), une troisième adaptée à recevoir un troisième fluide (désorbant) et une quatrième adaptée à recevoir un quatrième fluide (charge). Une première ligne de dérivation relie les premières chambres d'un plateau $P_i$ aux troisièmes chambres d'un plateau $P_{i+1}$ et une seconde ligne de dérivation relie les deuxièmes chambres d'un plateau $P_i$ aux quatrièmes chambres d'un plateau $P_{i+1}$.

L'invention concerne enfin l'utilisation du dispositif pour la séparation notamment de paraxylène dans un mélange de xylènes et d'éthylbenzène.

L'invention sera mieux comprise au vu des figures illustrant de manière schématique des modes de réalisation préférée du dispositif, parmi lesquelles :

- la figure 1 montre au niveau d'un secteur une coupe longitudinale d'une colonne d'adsorbant, à lit mobile simulé, à nombre pair de lits et à nombre impair de plateaux distributeurs à une seule chambre de distribution par secteur, comprenant des lignes de dérivation de flux contrôlé selon l'invention,
- la figure 2 illustre deux plateaux divisés en secteurs de plateaux reliés entre eux par la ligne de dérivation selon l'invention.
- la figure 3 montre une coupe longitudinale d'une colonne où chaque plateau distributeur comporte par secteur selon un plan radial deux chambres de distribution.
- la figure 4 représente une coupe longitudinale d'une colonne où chaque plateau distributeur comporte par secteur quatre chambres de distribution.

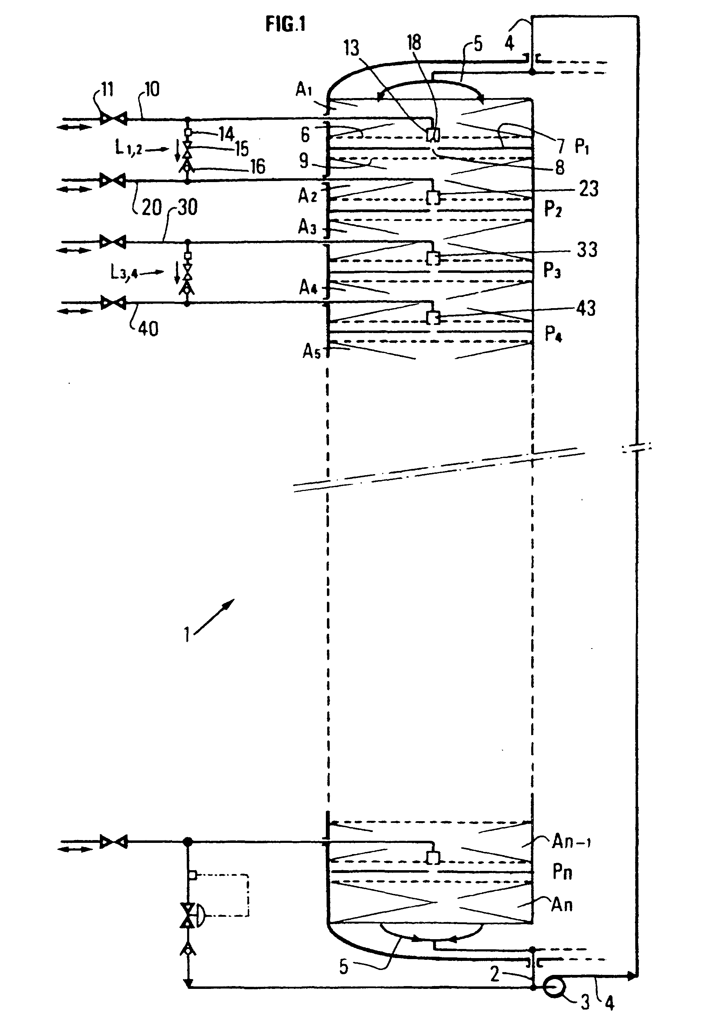

On représente selon la figure 1 une colonne 1 chromatographique cylindrique contenant une pluralité de lits $A_n$ d'un adsorbant, du tamis moléculaire zéolithique BaX par exemple.

Du fluide principal est soutiré de l'extrémité inférieure de la colonne par une ligne 2 pour être recyclé par une pompe 3 et une ligne 4 à l'extrémité supérieure de cette colonne où il est introduit dans le lit supérieur $A_1$ d'adsorbant par des lignes 5.

Pour la séparation de paraxylène à partir d'une charge de xylènes, on dispose généralement de deux colonnes de douze lits chacune, les vingt-quatre lits étant divisés en au moins quatre zones, chaque zone étant délimitée par une injection d'un fluide de l'extérieur de la colonne (du désorbant ou de la charge par exemple) et un soutirage d'un autre fluide (extrait ou raffinat par exemple). Par exemple, cinq lits sont réservés à la zone I, neuf lits à la zone II, sept lits à la zone III et trois lits à la zone IV. Sous le lit $A_1$ se situe le plateau distributeur $P_1$ de fluide devant traverser le lit suivant.

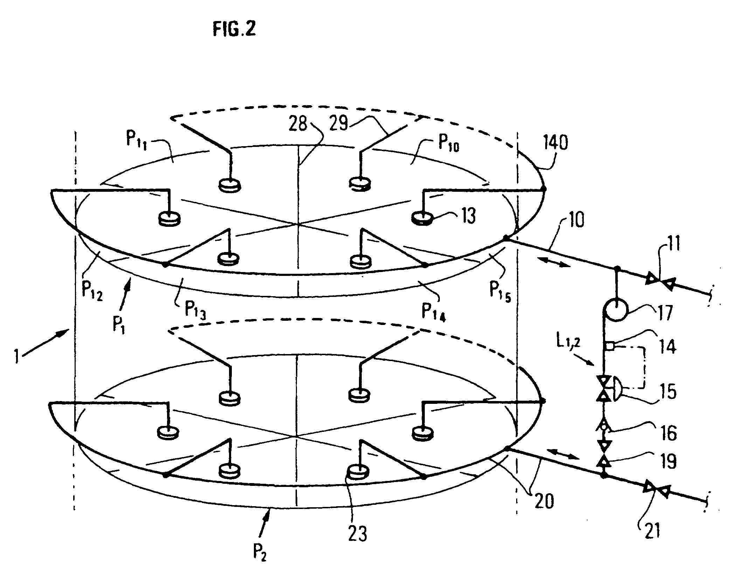

Chaque plateau distributeur $P_1$ selon la figure 2 est divisé en secteurs de plateaux $P_{10}$, $P_{11}$, $P_{12}$, $P_{13}$, $P_{14}$, $P_{15}$, délimités par des parois 28 soit radiales, comme indiqué sur la figure, soit sensiblement parallèles à un diamètre de la colonne. Chaque secteur comporte une chambre de distribution $C_i$ de fluide, de forme longitudinale, soit pour l'introduction de fluide secondaire, soit pour le soutirage de fluide secondaire comme indiqué ci-dessous et chaque chambre est connectée via une ligne 29 à une ligne 140. Cette ligne située à l'intérieur ou à l'extérieur de la colonne récupère les fluides de toutes les chambres et est reliée à une ligne de transfert 10 de fluide secondaire.

Chaque plateau distributeur $P_i$ est situé entre deux lits d'adsorbant. Chaque secteur de plateau $P_{10}$ à

$P_{15}$ représenté schématiquement sous forme angulaire sur la figure 1 comporte une grille supérieure 6 supportant le lit supérieur d'adsorbant A1, sensiblement perpendiculaire à l'axe de la colonne et permettant l'écoulement et la collecte de fluide du lit $A_1$. Il comprend par ailleurs deux plateaux déflecteurs non perforés 7 plats disposés sur un même plan horizontal, entre lesquels on dispose un espace 8 de circulation du fluide. Une grille inférieure 9 sous les déflecteurs 7 permet de répartir uniformément le fluide dans le lit inférieur d'adsorbant.

Au niveau de chaque plateau distributeur $P_i$, la ligne de transfert de fluide secondaire 10, 20 connectée à au moins quatre lignes de transfert de fluides secondaires non représentées sur la figure 1 (ligne d'injection de charge, ligne d'injection de désorbant, ligne de soutirage d'un extrait et ligne de soutirage d'un raffinat) comprenant chacune d'elles une vanne séquentielle, représentée symboliquement par la vanne 11, 21 disposée le plus près possible de la ligne de dérivation. Ces vannes séquentielles peuvent être remplacées par une vanne rotative assurant l'ensemble des injections de fluide secondaire dans la colonne ou des soutirages de fluide de la colonne, la dérivation d'une ligne vers l'autre selon l'invention pouvant être réalisée à l'extérieur ou à l'intérieur de la vanne rotative par l'ajout de connexions tournantes et de lignes ou orifices calibrés appropriés. L'ensemble des dites vannes sont connectées à des moyens de commande de permutation séquentielle adaptés à faire avancer périodiquement chaque point d'injection de fluide secondaire ou de soutirage de fluide secondaire d'un lit dans le sens de circulation du fluide principal, c'est-à-dire du haut vers le bas. On dispose ainsi d'un lit mobile simulé fonctionnant à contre-courant.

Sur la figure 1, chaque chambre $C_i$, (13, 23, 33, 43) de distribution du fluide secondaire comporte dans sa partie inférieure des orifices 18 avantageusement disposés au-dessus de l'espace de circulation 8, par lesquels s'écoule le fluide secondaire pour être soit introduit dans le lit suivant après avoir été mélangé au fluide principal ayant traversé le lit principal, soit pour être soutiré par la ligne de transfert appropriée.

Les chambres de distribution 13 du plateau $P_1$ sont reliées aux chambres de distribution 23 du plateau distributeur $P_2$ situé entre les lits $A_2$ et $A_3$ d'adsorbant, via une ligne de dérivation $L_{1,2}$. Le volume de fluide qui traverse les chambres 13, la partie de la ligne de transfert 10 jusqu'à la ligne de dérivation, la ligne de dérivation $L_{1,2}$, la partie de la ligne de transfert 20 communiquant avec les chambres de distribution 23 du plateau $P_2$ ainsi que les dites chambres 23 est bien connu.

Chaque ligne de dérivation ($L_{1,2}$, $L_{3,4}$, ...) comporte un débitmètre, une vanne 15 de contrôle de débit asservie au débitmètre et un clapet anti-retour 16 en aval adapté à la seule circulation du fluide des chambres 13 vers les chambres 23. Une pompe 17 permet éventuellement de suppléer à l'insuffisance de perte de charge entre les chambres des deux plateaux. Une vanne tout ou rien 19 disposée sur la ligne de dérivation peut interdire toute circulation de fluide dans la ligne de dérivation.

Le dispositif à une seule chambre de distribution par secteur de plateau distributeur peut fonctionner de la façon suivante : durant la période de soutirage d'un extrait par la ligne 10, on ouvre la vanne 11, on soutire l'extrait par les chambres 13 du plateau $P_1$, le clapet anti-retour 16 interdit toute circulation du fluide dans la ligne de circulation $L_{1,2}$. Durant la période suivante, la vanne 11 étant fermée, on soutire de l'extrait du plateau $P_{i+1}$ via les chambres 23 et du plateau $P_i$ via les chambres 13, la vanne 21 étant ouverte et la circulation de l'extrait dans la ligne de dérivation étant rétablie avec un débit tel qu'indiqué précédemment. On procéderait de la même façon pour le soutirage du raffinat sur les plateau $P_j$ et $P_{j+1}$ durant le cycle.

Selon une autre variante où la ligne de dérivation comprend la vanne 19, lorsque l'extrait est soutiré par la ligne 20 et la vanne 21 ouverte, on interdit tout soutirage du plateau $P_j$ par la ligne 10 en fermant cette vanne 19.

Durant la période d'injection de charge au cours du cycle, on peut introduire une partie de la charge dans le plateau $P_k$ via les chambres de distribution 13 et la ligne de transfert 10 de charge et l'autre partie, mineure, dans le plateau $P_{k+1}$ via la ligne de dérivation, la ligne 20 et les chambres 23, la vanne 11 étant ouverte et la vanne 21 étant fermée.

Durant la période suivante, on ferme la vanne 11, on ouvre la vanne 21, on envoie la totalité de la charge dans les chambres 23 du plateau distributeur $P_{k+1}$, le débit de la ligne de dérivation est annulé par le clapet anti-retour. On procéderait de la même façon pour l'introduction de désorbant sur les plateaux $P_1$ et $P_{l+1}$ durant le cycle.

Selon une autre variante, lorsqu'on introduit la charge sur le plateau $P_K$, on peut fermer la vanne 19 sur la ligne de dérivation pour empêcher tout transfert du fluide dans le plateau $P_{K+1}$.

Sur les plateaux $P_i$ et $P_{i+1}$ qui ne reçoivent aucun fluide secondaire (ni injection de charge ou de désorbant, ni soutirage d'extrait ou de raffinat), les vannes 11, 21 sur les lignes de transfert 10 et 20 sont fermées et le fluide principal provenant du lit $A_1$ est rassemblé dans les déflecteurs 7 et s'écoule à travers l'espace de circulation 8. Une partie circule à travers les orifices des chambres 13 du plateau $P_i$, balaie les chambres 13, les lignes de transfert 29, la ligne 140, la ligne de transfert 10, la ligne de dérivation $L_{1,2}$ et atteint sous débit contrôlé par l'intermédiaire du débitmètre 14 et de la vanne 15 asservie au débitmètre la ligne de transfert 20 du fluide. Le clapet anti-retour 16 reste ouvert. Le fluide est introduit à la fin d'une période dans les chambres 23 du plateau $P_{i+1}$, qui sont ainsi balayées par un fluide ayant sensiblement la même composition que celle du fluide, ayant traversé durant la période le lit $A_2$, qui

circule dans l'espace de circulation 8. Le fluide des chambres 23 est évacué par les orifices 18 dans l'espace de circulation 8 où il est mélangé avec celui qui a traversé le lit précédent.

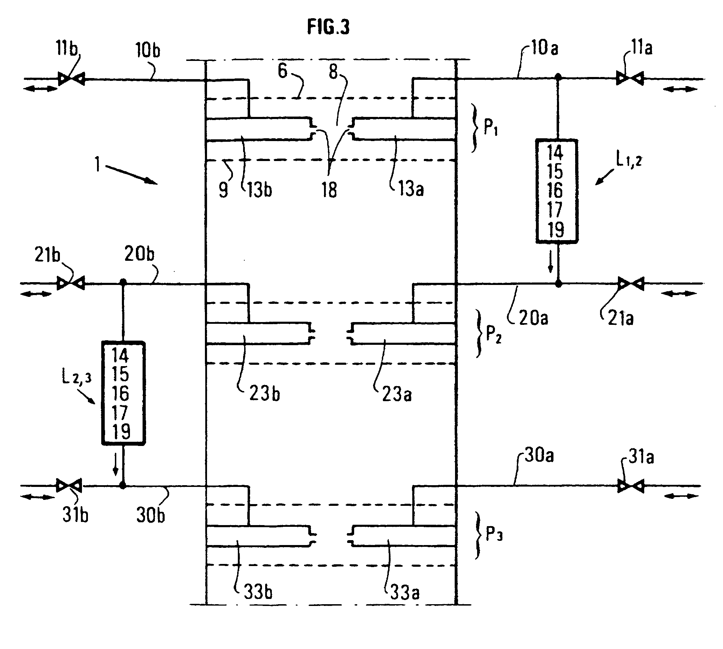

La figure 3 illustre un secteur $P_{10}$ d'un plateau distributeur $P_1$ comportant deux chambres 13a, 13b de distribution d'un fluide ayant de plus le rôle de déflecteurs de fluide, avec les mêmes références pour les mêmes moyens que celles des figures 1 et 2. Leurs orifices se font sensiblement face (bien que disposés préférentiellement en quinconce) au niveau de l'espace 8. Les premières chambres 13a sont adaptées à recevoir un premier fluide et les deuxièmes chambres 13b sont adaptées à recevoir un deuxième fluide. Les lignes de connexion de toutes les premières chambres 13a d'un même plateau de distribution $P_1$ sont reliées à la ligne de transfert 10a d'un fluide. Cette ligne de transfert 10a du plateau $P_1$ communique avec la ligne de transfert 20a du plateau $P_2$ par la ligne de dérivation $L_{1,2}$ comprenant les moyens 14, 15, 16 et éventuellement 17 et 19 mentionnés dans la figure 2. La ligne 20a est connectée à toutes les deuxièmes chambres 23a du plateau $P_2$.

Les premières chambres 23b correspondant aux secteurs du plateau distributeur $P_2$ sont connectées par une ligne de dérivation $L_{2,3}$ sensiblement identique à la ligne $L_{1,2}$ et par une ligne de transfert 30b, aux deuxièmes chambres 33b du plateau distributeur $P_3$. Pendant une période du cycle où l'on effectue un soutirage, on soutire par exemple de l'extrait des premières chambres 23b du plateau $P_2$, le débit de la ligne de dérivation alimentant le plateau $P_3$ est annulé par le clapet anti-retour et on introduit dans les secondes chambres 23a du plateau $P_2$ du fluide provenant des premières chambres du plateau $P_1$, le clapet anti-retour étant ouvert, les vannes 11a et 21a étant fermées.

Le soutirage du raffinat peut s'effectuer dans les mêmes conditions.

Pendant la période du cycle où l'on effectue l'introduction de désorbant ou de la charge, on introduit de l'extérieur de la colonne, de la charge par exemple dans les secondes chambres 23a d'un plateau $P_2$, la vanne 21a étant ouverte, le clapet antiretour étant fermé dans la ligne de dérivation $L_{1,2}$ et on soutire des premières chambres 23b du plateau $P_2$ du fluide que l'on introduit dans les secondes chambres 33b du plateau $P_3$ via la ligne de dérivation $L_{2,3}$, les vannes 21b et 31b étant fermées.

En-dehors des points de soutirage ou d'introduction sur les dites chambres de la colonne, on soutire le fluide des premières chambres du plateau $P_1$, la vanne 11a étant fermée et on l'introduit grâce à la ligne $L_{1,2}$ sous débit contrôlé, dans les secondes chambres du plateau $P_2$, la vanne 21a étant fermée.

On a représenté les deux chambres dans un plan horizontal mais elles pourraient être disposées dans ou au-dessus de l'espace de circulation 8 entre les plateaux déflecteurs 7.

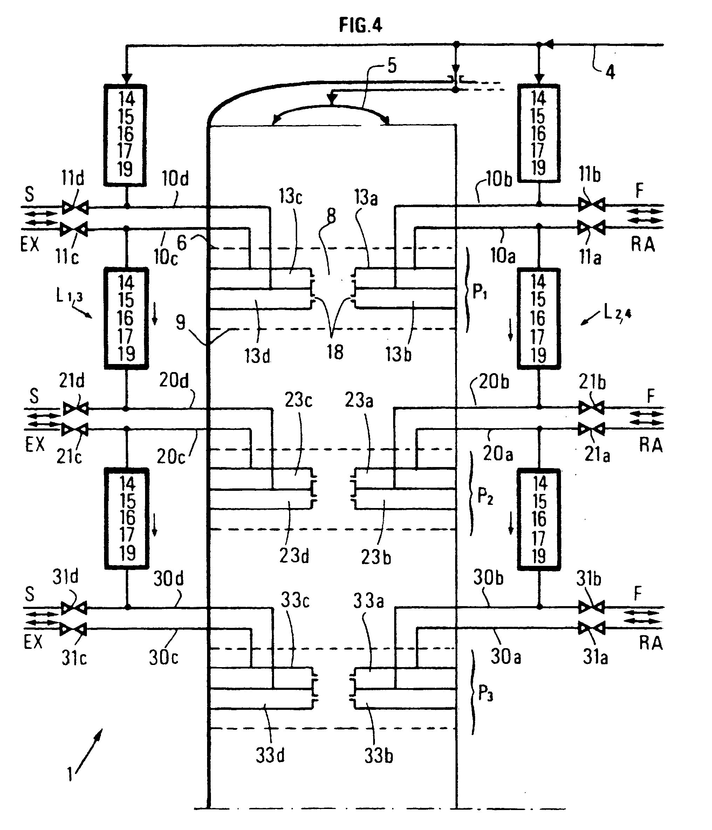

La figure 4 illustre un plateau distributeur $P_1$ de fluide avec quatre chambres indépendantes 13a, 13b, 13c et 13d par secteur ayant de plus le rôle de déflecteur de fluide. Les mêmes moyens des figures 1 et 2 ont les mêmes fonctions et les mêmes références.

Les deuxièmes chambres 13a sont adaptées à recevoir le raffinat. Elle sont reliées à la vanne 11a par la ligne de transfert 10a.

Les quatrièmes chambres 13b sous les deuxièmes sont adaptées à recevoir la charge. La ligne de transfert 10b et sa vanne 11b l'alimentent.

Les premières chambres 13c sur le même plan que les deuxièmes sont adaptées à recevoir de l'extrait. La ligne de transfert 10c et sa vanne 11c permettent de le soutirer vers l'extérieur de la colonne.

Les troisièmes chambres 13d sous les premières sont adaptées à recevoir du désorbant. La ligne de transfert 10d et sa vanne 11d l'alimentent.

Les orifices 18 des quatre chambres 13a, 13b, 13c et 13d sont ouverts dans l'espace de circulation 8.

Au niveau de chaque secteur du plateau $P_2$, on rencontre les mêmes chambres 23a, 23b, 23c et 23d dans les mêmes positions que précédemment ainsi que les organes qui leur sont rattachés.

Les deuxièmes chambres 13a du plateau $P_1$ sont raccordées aux quatrièmes chambres 23b du plateau $P_2$ par la ligne de dérivation $L_{2,4}$ et les premières chambres 13c du plateau $P_1$ sont connectées aux troisièmes chambres 23d du plateau $P_2$ par la ligne de dérivation $L_{1,3}$.

En dehors des périodes de soutirage de fluide (extrait ou raffinat) et d'introduction de fluide (charge, désorbant), on soutire le fluide des premières chambres 13c et des deuxièmes chambres 13a du plateau $P_1$ pour l'introduire respectivement dans les troisièmes 23d et quatrièmes chambres 23b du plateau $P_2$ et ainsi de suite.

Les chambres 13d et les chambres 13b du plateau $P_1$ sont alimentées à partir du fluide principal (ligne 4) recyclé par la pompe de recyclage 3 (voir figure 1), les vannes 11a, 11b, 11c et 11d ainsi que les vannes 21a, 21b, 21c et 21d sont fermées.

Durant une période du cycle relative au soutirage de l'extrait, on soutire habituellement de l'extrait des premières chambres 23c du plateau $P_2$, on annule le débit de fluide de la ligne $L_{1,3}$ alimentant les troisièmes chambres 33d du plateau $P_3$, les troisièmes et quatrièmes chambres du plateau $P_2$ recevant respectivement du fluide des premières et deuxièmes chambres du plateau $P_1$ via la ligne de dérivation correspondante.

Durant une période de cycle relative au soutirage du raffinat, plus généralement, on soutire du raffinat des deuxièmes chambres d'un plateau $P_i$, on annule le débit de fluide de la ligne de dérivation $L_{2,4}$ alimentant les quatrièmes chambres du plateau $P_{i+1}$, les troisièmes et quatrièmes chambres du plateau $P_i$ recevant respectivement du fluide des premières et deuxièmes chambres du plateau précédent $P_{i-1}$ via la ligne de dérivation correspondante.

Durant une période du cycle relative à l'introduction du désorbant, on introduit de l'extérieur de la colonne du désorbant dans les troisièmes chambres d'un plateau $P_i$, on annule le débit de fluide de la ligne de dérivation alimentant les troisièmes chambres du plateau $P_i$, les premières et deuxièmes chambres du plateau $P_i$ recevant du fluide alimentant respectivement les troisièmes et les quatrièmes chambres du plateau $P_{i+1}$ via la ligne de dérivation et les quatrièmes chambres du plateau suivant $P_i$ recevant du fluide des deuxièmes chambres du plateau précédent $P_{i-1}$ via la ligne de dérivation correspondante.

Durant une période du cycle relative à l'introduction dans la colonne de la charge dans les quatrièmes chambres d'un plateau $P_i$, on annule le débit de fluide de la ligne de dérivation alimentant les quatrièmes chambres du plateau $P_i$, les premières et deuxièmes chambres du plateau $P_i$ alimentant respectivement les troisièmes et quatrième chambres du plateau suivant $P_{i+1}$ via les lignes de dérivation correspondantes et les troisièmes chambres du plateau $P_i$ recevant du fluide des premières chambres du plateau $P_{i-1}$ via la ligne de dérivation correspondante.

Exemple :

A titre d'exemple de réalisation selon l'invention, on décrit le cas d'une unité de séparation de paraxylène à partir d'une charge comprenant principalement un mélange d'orthoxylène, de métaxylène, de paraxylène et d'éthylbenzène. Cette unité fonctionne selon le principe de l'adsorption en lit mobile simulé et comprend deux adsorbeurs d'un diamètre de 4,80 m, disposés en série de 12 lits d'adsorbant chacun, par exemple une faujasite échangée au baryum.

Entre chaque lit sont disposés des plateaux distributeurs, chaque secteur de plateau comportant deux chambres de distribution, la première chambre étant destinée à recevoir une introduction de solvant ou un soutirage de raffinat, la deuxième chambre étant destinée à recevoir une introduction de charge ou un soutirage d'extrait (voir figure 3).

Dans les conditions d'opération normale, la perte de charge sur un lit entre deux plateaux distributeurs successifs est d'environ 0,31 kg/cm². La période qui définit le temps de permutation des injections et soutirage d'un lit à l'autre, et donc représente le temps d'avancement des profils de concentration d'un lit à l'autre, est de 84 secondes, sachant que le débit moyen de fluide circulant à travers les lits est de 800 m³/h.

En l'absence d'un dispositif selon l'invention, on estime sur chaque plateau distributeur un débit de recirculation parasite d'une partie des secteurs d'un plateau vers les autres secteurs du même plateau, de l'ordre de 1 à 3 m³/h, ce débit étant dû aux faibles différences de pression existant entre les secteurs d'un même plateau.

Pour corriger ce phénomène de recirculation préjudiciable aux performances du procédé, on a disposé, à chaque étage, entre deux plateaux distributeurs successifs, une ligne de dérivation selon l'invention reliant les premières chambres du plateau $P_i$ aux deuxièmes chambres du plateau $P_{i+1}$ (cf. fig. 4).

Pour le premier lit de chaque adsorbeur, la ligne de dérivation relie la ligne principale 4 aux deuxièmes chambres du plateau $P_1$ (cf. fig. 4).

Pour le dernier lit de chaque adsorbeur, la ligne de dérivation relie la première chambre du plateau Pn à la ligne principale 2 (cf. fig. 1).

Sur chacune des lignes de dérivation sont disposés un dispositif de mesure de débit, une vanne d'ajustement du débit, un clapet anti-retour et une vanne (19) à ouverture/fermeture séquencielle, chacun de ces éléments étant choisi pour donner une faible perte de charge.

Le débit optimal dans la ligne de dérivation entre deux plateaux consécutifs $P_i$ et $P_{i+1}$ est déterminé comme suit :

- volume des premières chambres de distribution et tuyauteries associées du plateau $P_i$ : 276 l
- volume de la ligne de dérivation : 170 l
- volume des deuxièmes chambres de distribution et tuyauteries associées du plateau $P_{i+1}$ : 228 l
- Total volume à circuler entre deux plateaux successifs : 674 l
- débit visé dans la ligne de dérivation : $$\frac{674\ l \times 3\ 600\ sec.}{84\ sec.} = 28\ 886\ l/h$$

soit approximativement 29 m3/h.

Ce débit peut être assuré sans pompe grâce à la perte de charge disponible entre deux plateaux distributeurs et les faibles pertes de charge des éléments utilisés sur la ligne de dérivation.

Par ailleurs, ce débit étant très largement supérieur au débit de recirculation parasite sur un plateau, on annule les effets de la recirculation parasite.

On a démontré que grâce à ce dispositif selon l'invention :

- on peut obtenir aisément des puretés de paraxylène supérieures à 99,9 %,
- il n'est plus nécessaire de rincer les lignes préalablement au soutirage du produit recherché, ce qui se traduit par un fonctionnement du lit mobile en contrecourant simulé en seulement 4 zones et non en 5 ou 6 zones comme nécessaires selon l'art antérieur.

**Revendications**

1. Procédé de séparation chromatographique d'une charge dans un dispositif en lit mobile simulé comprenant une pluralité de lits (A1 à An) d'un solide ou adsorbant contenus dans au moins une colonne chromatographique, un plateau distributeur (Pi) de fluide entre chaque lit, chaque plateau distributeur étant divisé en une pluralité de secteurs (P10, P11, P12), chaque secteur de plateau distributeur (Pi) comprenant au moins une chambre (13) de distribution percée d'orifices (18) et un espace (8) de circulation de fluide au voisinage des dits orifices de la chambre, la dite chambre étant connectée à une ligne (10) de transfert s'étendant entre la chambre et un point situé à l'extérieur de la colonne, on effectue durant une période T du cycle, une injection de la charge, un soutirage d'un raffinat, une injection de désorbant et un soutirage d'un extrait dans et depuis une chambre de distribution appartenant à des plateaux différents, le procédé étant **caractérisé en ce qu'**on fait circuler en permanence à un débit approprié un volume de fluide circulant dans la colonne dans une ligne de dérivation (L1, 2) reliant les chambres d'un plateau distributeur $P_i$ vers les chambres d'un autre plateau distributeur en aval $P_{i+j}$, distant d'au moins un lit, pendant au moins une période T du cycle, la période T correspondant au temps de circulation du fluide dans un lit d'adsorbant, les dites chambres de distribution ne recevant pendant la dite période ni l'injection de charge ou de désorbant ni le soutirage d'un raffinat ou d'un extrait, le débit de fluide circulant dans la ligne de dérivation et dans les chambres étant ajusté de telle façon qu'on balaie les dites chambres de circulation par un fluide ayant sensiblement la même composition que celle du fluide circulant à travers l'espace de circulation au niveau de chacune des chambres des plateaux $P_i$ et $P_{i+j}$.

2. Procédé selon la revendication 1, dans lequel les dites chambres de plateaux distributeurs sont séparées par un lit d'adsorbant.

3. Procédé selon la revendication 1 ou 2, dans lequel le débit de fluide circulant dans la ligne de dérivation est le quotient du volume disponible dans les chambres de distribution concernées et la ligne de dérivation, divisé par la période du cycle, plus ou moins 50 % et de préférence plus ou moins 15 %.

4. Procédé selon l'une des revendications 1 à 3, dans lequel les dites chambres de plateaux distributeurs sont séparées par deux lits d'adsorbant.

5. Procédé selon la revendication 4, dans lequel le débit de fluide circulant dans la ligne de dérivation est le quotient du volume disponible dans les chambres de distribution et la ligne de dérivation, divisé par deux fois la période du cycle, plus ou moins 50 % et de préférence plus ou moins 15 %.

6. Procédé selon l'une des revendications 1 à 5, dans lequel on annule, pendant une période, le débit du fluide circulant dans la ligne de dérivation entre les plateaux de distribution $P_i$ et $P_{i+1}$, lorsque les chambres du plateau distributeur $P_i$ reçoivent l'injection de charge ou de désorbant ou de tout autre fluide (flush-in) ou le soutirage de raffinat ou d'extrait ou de tout autre fluide (flush out).

7. Procédé selon l'une des revendications 1 à 5, dans lequel, durant la période de soutirage d'un extrait ou d'un raffinat, sur un plateau distributeur donné ne comportant qu'une seule chambre par secteur, on soutire l'extrait ou le raffinat du plateau $P_i$, le débit de dérivation étant annulé par un clapet anti-retour et durant la période suivante, on soutire de l'extrait ou du raffinat du plateau $P_{i+1}$ et du plateau $P_i$, la circulation de fluide dans la ligne de dérivation étant rétablie.

8. Procédé selon l'une des revendications 1 à 5 et 7, dans lequel durant la période d'injection de charge ou du désorbant, on introduit une partie de la charge ou du désorbant dans un plateau approprié $P_i$ via la ligne de dérivation et durant la période suivante, on envoie la totalité de la charge dans le plateau distributeur suivant $P_{i+1}$, le débit de dérivation étant annulé par un clapet anti-retour.

9. Procédé selon l'une des revendications 1 à 5, dans lequel chaque secteur de plateau distributeur comprend deux chambres (13a, 13b) de distribution, une première destinée à recevoir un soutirage d'extrait ou de raffinat et une seconde destinée à recevoir une introduction de charge ou de désorbant et dans lequel, en dehors des périodes de soutirage d'extrait et de raffinat et d'introduction de charge et de désorbant sur les dites chambres, on soutire le fluide des premières chambres d'un plateau distributeur $P_i$ pour l'introduire, grâce à la ligne de dérivation, dans les deuxièmes chambres du plateau distributeur $P_{i+1}$.

10. Procédé selon la revendication 9, dans lequel pendant une période, on soutire de l'extrait ou du raffinat des premières chambres, d'un plateau $P_i$, on annule le débit de la ligne de dérivation alimentant les deuxièmes chambres du plateau $P_{i+1}$ et on introduit dans les deuxièmes chambres du plateau $P_i$ du fluide provenant des premières chambres du plateau $P_{i-1}$ via la ligne de dérivation.

11. Procédé selon l'une des revendications 1 à 5, dans lequel chaque secteur de plateau distributeur comprend deux chambres de distribution, une première destinée à recevoir un soutirage d'extrait, une seconde destinée à recevoir une introduction de charge ou de désorbant ou un soutirage de raffinat et dans lequel en dehors des périodes de soutirage d'extrait et de raffinat et d'introduction de charge et de désorbant sur les dites chambres, on soutire le fluide des premières chambres d'un plateau distributeur $P_i$ pour l'introduire grâce à la ligne de dérivation, dans les deuxièmes chambres du plateau distributeur $P_{i+1}$.

12. Procédé selon la revendication 11, dans lequel, pendant une période, on soutire de l'extrait des premières chambres d'un plateau $P_i$, on annule le débit de la ligne de dérivation alimentant les deuxièmes chambres du plateau $P_{i+1}$ et on introduit dans les deuxièmes chambres du plateau $P_i$ du fluide provenant des premières chambres du plateau $P_{i-1}$ via la ligne de dérivation.

13. Procédé selon la revendication 11 ou 12, dans lequel pendant une période, on soutire du raffinat des deuxièmes chambres d'un plateau $P_i$, on soutire du fluide des premières chambres du plateau $P_{i-1}$ via la ligne de dérivation entre les plateaux $P_{i-1}$ et $P_i$ et on introduit du fluide provenant des premières chambres du plateau $P_i$ dans les deuxièmes chambres du plateau $P_{i+1}$ via la ligne de dérivation entre les plateaux $P_i$ et $P_{i+1}$.

14. Procédé selon l'une des revendications 9 à 13, dans lequel, pendant une période du cycle, on introduit de l'extérieur de la colonne, de la charge ou du désorbant dans les deuxièmes chambres d'un plateau $P_i$, on annule le débit de fluide de la ligne de dérivation alimentant les deuxièmes chambres du plateau $P_i$, et on soutire des premières chambres du plateau $P_i$ du fluide que l'on introduit dans les deuxièmes chambres du plateau $P_{i+1}$ via la ligne de dérivation.

15. Procédé selon l'une des revendications 1 à 5, dans lequel chaque secteur de plateau distributeur comprend deux chambres de distribution, une première destinée à recevoir un soutirage de raffinat ou une introduction de désorbant et une seconde destinée à recevoir une introduction de charge, de désorbant ou un soutirage d'extrait et dans lequel, en dehors des périodes de soutirage d'extrait et de raffinat et d'introduction de charge et de désorbant sur les dites chambres, on soutire le fluide des premières chambres d'un plateau distributeur $P_i$ pour l'introduire, grâce à la ligne de dérivation, dans les deuxièmes chambres du plateau distributeur $P_{i+1}$.

16. Procédé selon la revendication 15, dans lequel pendant une période, on soutire du raffinat des premières chambres d'un plateau $P_i$, on annule le débit de la ligne de dérivation alimentant les deuxièmes chambres du plateau $P_{i+1}$ et on introduit dans les deuxièmes chambres du plateau Pi du fluide provenant des premières chambres du plateau $P_{i-1}$ via la ligne de dérivation.

17. Procédé selon l'une des revendications 15 et 16, dans lequel, pendant une période, on soutire de l'extrait des deuxièmes chambres d'un plateau $P_i$, on annule le débit de la ligne de dérivation alimentant les deuxièmes chambres du plateau $P_i$ et on introduit dans les deuxièmes chambres du plateau $P_{i+1}$ du fluide provenant des premières chambres du plateau $P_i$ via la ligne de dérivation.

18. Procédé selon l'une des revendications 15 à 17, dans lequel pendant une période, on introduit le désorbant dans les premières chambres d'un plateau $P_i$, on annule le débit de la ligne de dérivation alimentant les deuxièmes chambres du plateau $P_{i+1}$ et on introduit dans les deuxièmes chambres du plateau $P_i$ du fluide provenant des premières chambres du plateau $P_{i-1}$ via la ligne de dérivation correspondante.

19. Procédé selon l'une des revendications 15 à 18, dans lequel, pendant une période, on introduit la charge dans les deuxièmes chambres d'un plateau $P_i$, on annule le débit de la ligne de dérivation alimentant les deuxièmes chambres du plateau $P_i$ et on soutire le fluide des premières chambres du plateau $P_i$ pour l'introduire grâce à la ligne de dérivation correspondante dans les deuxièmes chambres du plateau $P_{i+1}$.

20. Procédé selon l'une des revendications 1 à 5, dans lequel chaque secteur de plateau distributeur comprend quatre chambres de distribution, une première destinée à recevoir un soutirage d'extrait, une deuxième destinée à recevoir un soutirage de raffinat, une troisième destinée à recevoir une introduction de désorbant et une quatrième destinée à recevoir une introduction de charge et dans lequel on soutire le fluide des premières chambres et des deuxièmes chambres d'un plateau distributeur $P_i$ pour l'introduire respectivement dans les troisièmes et les quatrièmes chambres du plateau $P_{i+1}$ en dehors des périodes de soutirage d'extrait ou de raffinat et d'introduction de désorbant ou de charge sur le dit plateau $P_i$.

21. Procédé selon l'une des revendications 1 à 5 et 20, dans lequel durant une période du cycle on soutire de l'extrait des premières chambres d'un plateau $P_i$, on annule le débit de fluide de la ligne de dérivation alimentant les troisièmes chambres du plateau $P_{i+1}$, les autres chambres recevant du fluide conformément à la revendication 20.

22. Procédé selon l'une des revendications 1 à 5 et 20 et 21, dans lequel durant une période du cycle, on soutire du raffinat des deuxièmes chambres d'un

plateau distributeur $P_i$, on annule le débit de fluide de la ligne de dérivation alimentant les quatrièmes chambres du plateau $P_{i+1}$, les autres chambres recevant du fluide conformément à la revendication 20.

23. Procédé selon l'une des revendications 1 à 5 et 20 à 22, dans lequel durant une période du cycle, on introduit de l'extérieur de la colonne, du désorbant dans les troisièmes chambres d'un plateau $P_i$, on annule le débit de fluide de la ligne de dérivation alimentant les troisièmes chambres du plateau $P_i$, les autres chambres recevant du fluide conformément à la revendication 20.

24. Procédé selon l'une des revendications 1 à 5 et 20 à 23 dans lequel durant une période du cycle, on introduit de l'extérieur de la colonne, de la charge dans les quatrièmes chambres d'un plateau $P_i$, on annule le débit de fluide de la ligne de dérivation alimentant les quatrièmes chambres, les autres chambres recevant du fluide conformément à la revendication 20.

25. Dispositif de séparation chromatographique d'une charge en lit mobile simulé comprenant au moins une colonne remplie d'un solide ou adsorbant, la colonne comprenant une pluralité de lits ($A_1$, $A_n$), un plateau distributeur $P_i$ de fluide entre chaque lit, chaque plateau distributeur étant divisé en une pluralité de secteurs ($P_{10}$, $P_{11}$, $P_{12}$) de plateaux distributeurs, chaque secteur de plateau distributeur comprenant au moins une chambre (13) de distribution percée d'orifices (18) et un espace (8) de circulation de fluide au voisinage des dits orifices de la chambre, la dite chambre étant connectée à une ligne de transfert (10) s'étendant entre la chambre et un point situé à l'extérieur de la colonne, le dispositif étant **caractérisé en ce que** la ligne de transfert (10) relative aux chambres de distribution d'un plateau $P_i$ est reliée par une ligne de dérivation ($L_{1,2}$) (bypass) à la ligne de transfert (20) relative aux chambres de distribution d'un autre plateau $P_{i+j}$ disposé en aval (par rapport au sens d'avancement des permutations des lignes de transfert) et **en ce que** la ligne de dérivation comporte des moyens (14, 15, 16) de contrôle et d'ajustement du débit de fluide y circulant, de telle sorte que les chambres de distribution soient balayées par un fluide qui a sensiblement la même composition que celle du fluide circulant à travers l'espace de circulation au niveau de chacune desdites chambres.

26. Dispositif selon la revendication 25 dans lequel les moyens de contrôle et d'ajustement de débit de fluide comportent un clapet anti-retour. (16)

27. Dispositif selon la revendication 25 ou 26, dans lequel les dits moyens de contrôle et d'ajustement du débit comprennent un moyen de mesure de débit et une vanne de réglage de débit, éventuellement asservie au moyen de mesure de débit.

28. Dispositif selon l'une des revendications 25 à 27, dans lequel la ligne de dérivation comprend une pompe. (17)

29. Dispositif selon l'une des revendications 25 à 28 dans lequel la ligne de dérivation comprend une vanne tout ou rien.

30. Dispositif selon l'une des revendications 25 à 29, dans lequel les lignes de transfert comprennent des vannes séquentielles.

31. Dispositif selon l'une des revendications 25 à 29, dans lequel les lignes de transfert sont reliées à au moins une vanne rotative et dans lequel la ligne de dérivation est à l'intérieur de la vanne rotative ou à l'extérieur de celle-ci.

32. Dispositif selon l'une des revendications 25 à 31, dans lequel le nombre de lits est pair, le nombre de plateaux distributeurs $P_n$ est impair, la ligne de dérivation $L_{1,2}$ relie les chambres de distribution du plateau distributeur $P_1$ à celles du plateau distributeur $P_2$, le plateau $P_2$ étant disposé en aval du plateau $P_1$, la ligne de dérivation $L_{3,4}$ relie les chambres de distribution du plateau distributeur $P_3$ à celles du plateau distributeur $P_4$, le plateau $P_4$ étant disposé en aval du plateau $P_3$ et la ligne de dérivation $L_n$ relie la chambre de distribution du plateau distributeur $P_n$ à la ligne de recyclage (2, 4) du fluide principal du dernier lit $A_n$ vers le premier lit $A_1$.

33. Dispositif selon l'une des revendications 25 à 31, dans lequel le nombre de lits est pair, le nombre de plateaux distributeurs $P_n$ est impair, une ligne de dérivation relie la ligne de recyclage du fluide principal à la chambre de distribution du plateau distributeur $P_1$, la ligne de dérivation $L_{2,3}$ relie les chambres de distribution du plateau distributeur $P_2$ à celles du plateau distributeur $P_3$, le plateau $P_3$ étant disposé en aval du plateau $P_2$ et la ligne de dérivation $L_{n-1,n}$ relie les chambres de distribution du plateau distributeur $P_{n-1}$ à celles du plateau distributeur $P_n$, le plateau $P_n$ étant disposé en aval du plateau $P_{n-1}$.

34. Dispositif selon l'une des revendications 25 à 31, dans lequel le nombre de lits est impair, le nombre de plateaux distributeurs $P_n$ est pair, la ligne de dérivation $L_{1,2}$ relie les chambres de distribution du plateau distributeur $P_1$ à celles du plateau distributeur $P_2$, le plateau $P_2$ étant disposé en aval du plateau $P_1$, la ligne de dérivation $L_{3,4}$ relie les chambres de distribution du plateau distributeur $P_3$ à celles du plateau distributeur $P_4$, le plateau $P_4$ étant disposé en aval du plateau $P_3$ et la ligne de dérivation $L_{n-1,n}$ relie les chambres de distribution du plateau distributeur $P_{n-1}$ à celles du plateau distributeur $P_n$, le plateau $P_n$ étant disposé en aval du plateau $P_{n-1}$.

35. Dispositif selon l'une des revendications 25 à 31, dans lequel la ligne de dérivation relie les chambres d'un plateau $P_i$ à celles d'un plateau $P_{i+2}$.

36. Dispositif selon la revendication 35, dans lequel la ligne de dérivation relie les chambres du plateau $P_1$ à celles du plateau $P_2$, le plateau $P_2$ étant disposé en aval du plateau $P_1$ ou les chambres du plateau $P_{n-1}$ à celles du plateau $P_n$, le plateau $P_n$ étant disposé en aval du plateau $P_{n-1}$.

37. Dispositif selon l'une des revendications 25 à 31 dans lequel chaque secteur de plateau distributeur $P_i$ comprend deux chambres (13a, 13b) de distribution de fluide, une première adaptée à recevoir un premier fluide, une seconde adaptée à recevoir un second fluide et dans lequel une première ligne $(L_{1,2})$ de dérivation relie les premières chambres (13a) d'un plateau $P_i$ aux deuxièmes chambres (23a) d'un plateau $P_{i+1}$ et une seconde ligne de dérivation $(L_{2,3})$ relie les premières chambres (23b) du plateau $P_{i+1}$ aux deuxièmes chambres (33b) du plateau $P_{i+2}$ et ainsi de suite.

38. Dispositif selon l'une des revendications 25 à 31, dans lequel chaque secteur de plateau de distribution $P_i$ comprend deux chambres (13a, 13b) de distribution de fluide, une première adaptée à recevoir un premier fluide et une seconde adaptée à recevoir un second fluide et dans lequel une première ligne de dérivation relie les premières chambres d'un plateau $P_i$ aux premières chambres d'un plateau $P_{i+1}$ et une seconde ligne de dérivation relie les deuxièmes chambres du plateau $P_i$ aux deuxièmes chambres du plateau $P_{i+1}$.

39. Dispositif selon l'une des revendications 25 à 31, dans lequel chaque secteur de plateau distributeur $P_i$ comprend quatre chambres de distribution de fluide, une première adaptée à recevoir un premier fluide (extrait), une seconde adaptée à recevoir un second fluide (raffinat), une troisième adaptée à recevoir un troisième fluide (désorbant) et une quatrième adaptée à recevoir un quatrième fluide (charge) et dans lequel une première ligne de dérivation relie les premières chambres d'un plateau $P_i$ aux troisièmes chambres d'un plateau $P_{i+1}$ et une seconde ligne de dérivation relie les deuxièmes chambres d'un plateau $P_i$ aux quatrièmes chambres d'un plateau $P_{i+1}$.

40. Utilisation du dispositif selon l'une des revendications 25 à 39 pour la séparation d'au moins un isomère aromatique à huit atomes de carbone dans un mélange de xylènes et d'éthylbenzène.

**Patentansprüche**

1. Verfahren zum chromatographischen Trennen einer Charge in einer Vorrichtung im simulierten beweglichen Bett bzw. Wanderbett, das über eine Vielzahl von Betten (A1 bis An) eines Feststoffs oder Adsorbens, die in wenigstens einer chromatographischen Kolonne enthalten sind, verfügt, sowie über einen Fluidverteilerboden (Pi) zwischen jedem Bett, wobei jeder Verteilerboden in eine Vielzahl von Sektoren (P10, P11, P12) unterteilt ist, jeder Verteilerboden-Sektor (Pi) wenigstens eine Verteilerkammer (13) umfasst, die von Öffnungen (18) durchbohrt ist und darüber hinaus einen Fluidzirkulations- oder Strömungsraum (8) benachbart diesen Öffnungen der Kammer umfasst, wobei diese Kammer mit einer Überführungsleitung verbunden ist, die zwischen der Kammer und einem Punkt verläuft, der sich außerhalb der Kolonne befindet, man während einer Periode T des Zyklus eine Chargeninjektion, ein Abziehen eines Raffinats, eine Desorbensinjektion und ein Abziehen eines Extrakts in und aus einer mehreren unterschiedlichen Böden gemeinsamen Verteilerkammer vornimmt, **dadurch gekennzeichnet, dass** man dauernd bei geeignetem Durchsatz ein Fluidvolumen strömen lässt, das in der Kolonne in einer Umgehungsleitung (L1,2) zirkuliert, welche die Kammern eines Verteilerbodens $P_i$ gegen die Kammern eines anderen nachgeschalteten Verteilerbodens $P_{i+j}$ verbindet, der einen Abstand von wenigstens einem Bett hat, und zwar während wenigstens einer Periode T des Zyklus, wobei die Periode T der Zirkulationszeit des Fluids in einem Feststoffbett entspricht, diese Verteilerkammern während dieser Periode weder eine Injektion von Charge oder Desorbens noch ein Abziehen eines Raffinats oder eines Extrakts erfahren und der in der Parallelleitung und in den Kammern zirkulierende Fluiddurchsatz derart eingestellt wird, dass man diese Zirkulationskammern mit einem Fluid durchspült, das im Wesentlichen die gleiche Zusammensetzung wie die des Fluids hat, das durch den Zirkulationsraum in Höhe jeder der Kammern der Böden $P_i$ und $P_{i+j}$ strömt bzw. zirkuliert.

2. Verfahren nach Anspruch 1, bei dem diese Verteilerbodenkammern durch ein Adsorberbett voneinander getrennt sind.

3. Verfahren nach einem der Ansprüche 1 oder 2, bei dem der in der Parallelleitung strömende Fluiddurchsatz gleich dem Quotienten des in den betrachteten Verteilerkammern und der Parallelleitung verfügbaren Volumens, dividiert durch die Periode des Zyklus plus-minus 50 % und bevorzugt plus-minus 15 %, ist.

4. Verfahren nach einem der Ansprüche 1 bis 3, bei dem diese Verteilerbodenkammern voneinander durch zwei Adsorberbetten getrennt sind.

5. Verfahren nach Anspruch 4, bei dem der in der Parallelleitung strömende Fluiddurchsatz gleich dem Quotienten des in den betrachteten Verteilerkammern und der Parallelleitung verfügbaren Volumens, dividiert durch zweimal die Periode des Zyklus plus-minus 50 % und bevorzugt plus-minus 15 %, ist.

6. Verfahren nach einem der Ansprüche 1 bis 5, bei dem man während einer Periode den Durchsatz des in der Parallelleitung zwischen den Verteilerböden $P_i$ und $P_{i+1}$ zirkulierenden Fluids annulliert, wenn die Kammern des Verteilerbodens $P_i$ die Injektion von Charge oder Desorbens oder jedes anderen Fluids (flush-in) oder das Abziehen von Raffinat oder das Extrahieren jedes anderen Fluids (flush out) erfahren.

7. Verfahren nach einem der Ansprüche 1 bis 5, bei dem während der Periode des Abzugs eines Extrakts oder eines Raffinats auf einem gegebenen Verteilerboden, der nur eine einzige Kammer pro Sektor hat, man den Extrakt oder das Raffinat des Bodens $P_i$ abzieht, wobei der Paralleldurchsatz annulliert wird durch eine Rückschlagklappe und bei dem man während der folgenden Periode den Extrakt oder das Raffinat vom Boden $P_{i+1}$ und vom Boden $P_i$ abzieht, wobei die Zirkulation des Fluids in der Parallelkammer wieder hergestellt wird.

8. Verfahren nach einem der Ansprüche 1 bis 5 und 7, bei dem während der Periode der Injektion von Charge oder Desorbens man einen Teil der Charge oder des Desorbens in einen geeigneten Boden $P_i$ über die Parallelleitung einführt und man während der folgenden Periode die Gesamtheit der Charge in den folgenden Verteilerboden $P_{i+1}$ gibt, wobei der Paralleldurchsatz durch eine Rückschlagklappe annulliert wird.

9. Verfahren nach einem der Ansprüche 1 bis 5, bei dem jeder Verteilerbodensektor zwei Verteilerkammern (13a, 13b) umfasst, eine erste, die dazu bestimmt ist, ein Abziehen von Extrakt oder Raffinat aufzunehmen und eine zweite, die dazu bestimmt ist, ein Einführen von Charge oder Desorbens aufzunehmen und bei dem außerhalb der Perioden des Abziehens von Extrakt oder Raffinat und des Einführens von Charge und Desorbens auf diesen Kammern man das Fluid der ersten Kammern eines Verteilerbodens $P_i$ abzieht, um es dank der Parallelleitung in die zweiten Kammern des Verteilerbodens $P_{i+1}$ einzuführen.

10. Verfahren nach Anspruch 9, bei dem man während einer Periode den Extrakt oder das Raffinat aus den ersten Kammern eines Bodens $P_i$ abzieht, man den Durchsatz der Parallelleitung annulliert, welche die zweiten Kammern des Bodens $P_{i+1}$ speist und man in die zweiten Kammern des Bodens $P_i$ Fluid einführt, das aus den ersten Kammern des Bodens $P_{i-1}$ über die Parallelleitung kommend stammt.

11. Verfahren nach einem der Ansprüche 1 bis 5, bei dem jeder Verteilerbodensektor zwei Verteilerkammern umfasst, eine erste, die dazu bestimmt ist, einen Extraktabzug aufzunehmen, eine zweite, die dazu bestimmt ist, das Einführen von Charge oder Desorbens oder ein Abziehen von Raffinat aufzunehmen, und bei dem man außerhalb der Perioden des Abziehens von Extrakt und Raffinat und Einführens von Charge und Desorbens auf diese Kammern man das Fluid aus den ersten Kammern eines Verteilerbodens $P_i$ abzieht, um es dank der Parallelleitung in die zweiten Kammern des Verteilerbodens $P_{i+1}$ einzuführen.

12. Verfahren nach Anspruch 11, bei dem während einer Periode man den Extrakt aus den ersten Kammern eines Bodens $P_i$ abzieht, man den Durchsatz der die beiden Kammern des Bodens $P_{i+1}$ speisenden Leitung annulliert und man in die zweiten Kammern des Bodens $P_i$ über die Parallelleitung Fluid einführt, das aus den ersten Kammern des Bodens $P_{i-1}$ stammt.

13. Verfahren nach Anspruch 11 oder 12, bei dem während einer Periode man Raffinat aus den zweiten Kammern eines Bodens $P_i$ abzieht, man Fluid aus den ersten Kammern des Bodens $P_{i-1}$ über die Parallelleitung zwischen den Böden $P_{i-1}$ und $P_i$ abzieht und man Fluid einführt, das aus den ersten Kammern des Bodens $P_i$ stammt, und zwar in die zweiten Kammern des Bodens $P_{i+1}$ über die Parallelleitung zwischen den Böden $P_i$ und $P_{i+1}$.

14. Verfahren nach einem der Ansprüche 9 bis 13, bei dem man während einer Periode des Zyklus von außerhalb der Kolonne Charge und Desorbens in die zweiten Kammern eines Bodens $P_i$ einführt, man den Fluiddurchsatz der die zweiten Kammern des Bodens $P_i$ speisenden Parallelleitung zu null macht und man aus den ersten Kammern des Bodens $P_i$ Fluid abzieht, das man in die zweiten Kammern des Bodens $P_{i+1}$ über die Parallelleitung einführt.

**15.** Verfahren nach einem der Ansprüche 1 bis 5, bei dem jeder Verteilerbodensektor zwei Verteilerkammern umfasst, eine erste, die dazu bestimmt ist, ein Abziehen von Raffinat oder ein Einführen von Desorbens aufzunehmen und eine zweite, die dazu bestimmt ist, ein Einführen von Charge, Desorbens oder ein Abziehen von Extrakt aufzunehmen, und bei dem außerhalb der Perioden des Abziehens von Extrakt und Raffinat und des Einführens von Charge und Desorbens an oder aus den Kammern man das Fluid der ersten beiden Kammern eines Verteilerbodens $P_i$ abzieht, um es dank der Parallelleitung in die zweiten Kammern des Verteilerbodens $P_{i+1}$ einzuführen.

**16.** Verfahren nach Anspruch 15, bei dem während einer Periode man Raffinat aus den ersten Kammern des Bodens $P_i$ abzieht, man den Durchsatz der Parallelleitung zu null macht, welche die zweiten Kammern des Bodens $P_{i+1}$ speist, und man in die zweiten Kammern des Bodens $P_i$ über die entsprechende Parallelleitung Fluid einführt, das aus den ersten Kammern des Bodens $P_{i-1}$ stammt.

**17.** Verfahren nach einem der Ansprüche 15 und 16, bei dem während einer Periode man Extrakt aus den beiden Kammern des Bodens $P_i$ abzieht, man den Durchsatz der Parallelleitung, welche die beiden Kammern des Bodens $P_i$ speist, annulliert und man in die beiden Kammern des Bodens $P_{i+1}$ über die entsprechende Parallelleitung Fluid einführt, das aus den ersten Kammern des Bodens $P_i$ stammt.

**18.** Verfahren nach einem der Ansprüche 15 bis 17, bei dem während einer Periode man das Desorbens in die ersten Kammern eines Bodens $P_i$ einführt, man den Durchsatz der die zweiten Kammern des Bodens $P_{i+1}$ speisenden Parallelleitung zu null macht und man in die zweiten Kammern des Bodens $P_i$ über die entsprechende Parallelleitung Fluid einführt, das aus den ersten Kammern des Bodens $P_{i-1}$ stammt.

**19.** Verfahren nach einem der Ansprüche 15 bis 18, bei dem man während einer Periode die Charge in die zweiten Kammern eines Bodens $P_i$ einführt, man den Durchsatz der die zweiten Kammern des Bodens $P_i$ speisenden Parallelleitung zu null macht und man das Fluid aus den ersten Kammern des Bodens $P_i$ abzieht, um es dank der entsprechenden Parallelleitung in die zweiten Kammern des Bodens $P_{i+1}$ einzuführen.

**20.** Verfahren nach einem der Ansprüche 1 bis 5, bei dem jeder Verteilerbodensektor vier Verteilerkammern umfasst, eine erste, die dazu bestimmt ist, ein Abziehen von Extrakt aufzunehmen, eine zweite, die dazu bestimmt ist, ein Abziehen von Raffinat aufzunehmen, eine dritte, die dazu bestimmt ist, ein Einführen von Desorbens aufzunehmen und eine vierte, die dazu bestimmt ist, ein Einführen von Charge aufzunehmen und, bei dem man das Fluid aus den beiden ersten Kammern und den zweiten Kammern eines Verteilerbodens abzieht, um es jeweils in die dritten und vierten Kammern des Bodens $P_{i+1}$ außerhalb der Perioden des Abzugs von Extrakt oder Raffinat und des Einführens von Desorbens oder Charge an oder auf diesen Boden $P_i$ einzuführen.

**21.** Verfahren nach einem der Ansprüche 1 bis 5 und 20, bei dem man während einer Periode des Zyklus den Extrakt der ersten Kammern eines Bodens $P_i$ abzieht, man den Fluiddurchsatz aus der die dritten Kammern des Bodens $P_{i+1}$ speisenden Parallelleitung zu null macht, wobei die anderen Kammern Fluid gemäß Anspruch 20 aufnehmen.

**22.** Verfahren nach Anspruch 1 bis 5 und 20 und 21, bei dem man während einer Periode des Zyklus Raffinat aus den zweiten Kammern eines Verteilerbodens $P_i$ abzieht, man den Fluiddurchsatz der die vierten Kammern des Bodens $P_{i+1}$ speisenden Parallelleitung zu null macht, wobei die anderen Kammern Fluid gemäß Anspruch 20 aufnehmen.

**23.** Verfahren nach einem der Ansprüche 1 bis 5 und 20 bis 22, bei dem während einer Periode des Zyklus man von außerhalb der Kolonne Desorbens in die dritten Kammern eines Bodens $P_i$ einführt, man den Durchsatz des Fluids der die dritten Kammern des Bodens $P_i$ speisenden Parallelleitung zu null macht, wobei die anderen Kammern Fluid gemäß Anspruch 20 aufnehmen.

**24.** Verfahren nach einem der Ansprüche 1 bis 5 und 20 bis 23, bei dem während einer Periode des Zyklus man von außerhalb der Kolonne Charge in die vierten Kammern eines Bodens $P_i$ gibt, man den Fluiddurchsatz der die vierten Kammern speisenden Parallelleitung zu null macht, wobei die anderen Kammern Fluid gemäß Anspruch 20 aufnehmen.

**25.** Vorrichtung zur chromatographischen Trennung einer Charge im simulierten beweglichen Bett, die wenigstens eine mit einem Feststoff oder Adsorber gefüllte Kolonne umfasst, wobei die Kolonne über eine Vielzahl von Betten ($A_1$, $A_n$) und einen Verteilerboden $P_i$ für Fluid zwischen jedem Bett verfügt, jeder Verteilerboden in eine Vielzahl von Sektoren ($P_{10}$, $P_{11}$, $P_{12}$) von Verteilerböden unterteilt ist, jeder Verteilerbodensektor wenigstens eine Verteilerkammer (13) umfasst, die von Öffnungen (18) durchbohrt ist, sowie einen Raum (8) für die Zirkulation von Fluid benachbart den Öffnungen der Kammer und die Kammer mit einer Überführungsleitung (10) verbunden ist, die zwischen der Kammer und einem Punkt verläuft, der sich außerhalb der Kolonne befindet, **dadurch gekennzeichnet, dass** die Überführungsleitung (10) bezüglich der Verteilerkammem eines Bodens $P_i$ über eine Parallelleitung ($L_{1,2}$) (Bypass) mit der Überführungsleitung (20) bezüglich der Verteilerkammern eines anderen Bodens $P_{i+j}$ verbunden ist, welcher in Strömungsrichtung hinter (bezogen auf die Vorlaufrichtung der Permutationen der Überführungsleitungen) angeordnet ist, und dass die Parallelleitung Mittel (14, 15, 16) für Regelung und Einstellung des Durchsatzes des hierin zirkulierenden Fluides derart umfasst, dass die Verteilerkammern durch ein Fluid gespült werden, das im Wesentlichen über die gleiche Zusammensetzung wie die des Fluids verfügt, das durch den Zirkulationsraum in Höhe jeder dieser Kammern strömt.

26. Vorrichtung nach Anspruch 25, bei der die Regelund Einstellmittel für den Fluiddurchsatz eine Rückschlagklappe (16) umfassen.

27. Vorrichtung nach den Ansprüchen 25 und 26, bei der die Regel- und Einstellmittel für den Durchsatz ein Durchsatzmessmittel und ein Durchsatzeinstellventil umfassen, das gegebenenfalls über Durchsatzmessmittel gesteuert ist.

28. Vorrichtung nach einem der Ansprüche 25 bis 27, bei der die Parallelleitung eine Pumpe (17) umfasst.

29. Vorrichtung nach einem der Ansprüche 25 bis 28, bei der die Parallelleitung ein JA/NEIN-Ventil umfasst.

30. Vorrichtung nach einem der Ansprüche 25 bis 29, bei der die Überführungsleitungen Serienventile umfassen.

31. Vorrichtung nach einem der Ansprüche 25 bis 29, bei der die Überführungsleitungen mit wenigstens einem Drehventil verbunden sind und bei der die Parallelleitung oder die im Nebenschluss liegende Leitung sich im Inneren des Drehventils oder außerhalb hiervon befindet.

32. Vorrichtung nach einem der Ansprüche 25 bis 31, bei der die Anzahl der Betten gerade ist, die Anzahl der Verteilerbetten $P_n$ ungerade ist, die Parallelleitung $L_{1,2}$ die Verteilerkammern des Verteilerbodens $P_1$ mit denen des Verteilerbodens $P_2$ verbindet, wobei der Boden $P_2$ hinter dem Boden $P_1$ angeordnet ist, die Parallelleitung $L_{3,4}$ die Verteilerkammern des Verteilerbodens $P_3$ mit denen des Verteilerbodens $P_4$ verbindet, der Boden $P_4$ hinter dem Boden

$P_3$ angeordnet ist und die Parallelleitung $L_n$ die Verteilerleitung des Verteilerbodens $P_n$ mit der Rezyklierungsleitung (2, 4) für das Hauptfluid des letzten Bodens An zum ersten Bett $A_1$ verbindet.

33. Vorrichtung nach einem der Ansprüche 25 bis 31, bei der die Anzahl der Betten gerade ist, die Anzahl der Verteilerböden $P_n$ ungerade ist, eine Parallelleitung die Rezyklierungsleitung für das Hauptfluid mit der Verteilerkammer des Verteilerbodens $P_1$ verbindet, die Parallelleitung $L_{2,3}$ die Verteilerkammern des Verteilerbodens $P_2$ mit denen des Verteilerbodens $P_3$ verbindet, wobei der Boden $P_3$ hinter dem Boden $P_2$ angeordnet ist und die Parallelleitung $L_{n-1,n}$ die Verteilerkammern des Verteilerbodens $P_{n-1}$ mit denen des Verteilerbodens $P_n$ verbindet und der Boden $P_n$ hinter dem Boden $P_{n-1}$ angeordnet ist.

34. Vorrichtung nach einem der Ansprüche 25 bis 31, bei der die Anzahl der Betten ungerade ist, die Anzahl der Verteilerböden $P_n$ gerade ist, die Parallelleitung $L_{1,2}$ die Verteilerkammern des Verteilerbodens $P_1$ mit denen des Verteilerbodens $P_2$ verbindet, wobei der Boden $P_2$ hinter dem Boden $P_1$ angeordnet ist, die Parallelleitung $L_{3,4}$ die Verteilerkammern des Verteilerbodens $P_3$ mit denen des Verteilerbodens $P_4$ verbindet, wobei der Boden $P_4$ hinter dem Boden $P_3$ angeordnet ist und die Parallelleitung $L_{n-1,n}$ die Verteilerkammern des Verteilerbodens $P_{n-1}$ mit denen des Verteilerbodens $P_n$ verbindet, wobei der Boden $P_n$ hinter dem Boden $P_{n-1}$ angeordnet ist.

35. Vorrichtung nach einem der Ansprüche 25 bis 31, bei der die Parallelleitung die Kammern eines Bodens $P_i$ mit denen eines Bodens $P_{i+2}$ verbindet.

36. Vorrichtung nach Anspruch 35, bei der die Parallelleitung die Kammern des Bodens $P_1$ mit denen des Bodens $P_2$ verbindet, wobei der Boden $P_2$ hinter dem Boden $P_1$ angeordnet ist oder die Kammern des Bodens $P_{n-1}$ mit denen des Bodens $P_n$ verbunden sind, wobei der Boden $P_n$ hinter dem Boden $P_{n-1}$ angeordnet ist.

37. Vorrichtung nach einem der Ansprüche 25 bis 31, bei der jeder Verteilerbodensektor $P_i$ zwei Kammern (13a, 13b) für die Fluidverteilung umfasst, wobei eine erste so ausgelegt ist, dass sie ein erstes Fluid aufnimmt, eine zweite so ausgelegt ist, dass sie ein zweites Fluid aufnimmt und bei der eine erste Parallelleitung ($L_{1,2}$) die ersten Kammern (13a) eines Bodens $P_i$ mit den zweiten Kammern (23a) eines Bodens $P_{i+1}$ verbindet und eine zweite Parallelleitung ($L_{2,3}$) die ersten Kammern (23b) des Bodens $P_{i+1}$ mit den zweiten Kammern (33b) des Bodens $P_{i+2}$ etc. verbindet.

**38.** Vorrichtung nach einem der Ansprüche 25 bis 31, bei der jeder Verteilerbodensektor $P_i$ zwei Kammern (13a, 13b) zur Fluidverteilung umfasst, eine erste so ausgelegt, dass sie ein erstes Fluid aufnimmt und eine zweite, so ausgelegt, dass sie ein zweites Fluid aufnimmt und bei der eine erste Parallelleitung die ersten Kammern eines Bodens $P_i$ mit den ersten Kammern eines Bodens $P_{i+1}$ verbindet und eine zweite Parallelleitung die zweiten Kammern des Bodens $P_i$ mit den zweiten Kammern des Bodens $P_{i+1}$ verbindet.

**39.** Vorrichtung nach einem der Ansprüche 25 bis 31, bei der jeder Verteilerbodensektor $P_i$ vier Fluidverteilerkammern umfasst, eine so ausgelegt, dass sie ein erstes Fluid (Extrakt) aufnimmt, eine zweite, so ausgelegt, dass sie ein zweites Fluid (Raffinat) aufnimmt, eine dritte, so ausgelegt, dass sie ein drittes Fluid (Desorbens) aufnimmt und eine vierte, so ausgelegt, dass sie ein viertes Fluid (Charge) aufnimmt und bei der eine erste Parallelleitung die ersten Kammern eines Bodens $P_i$ mit den dritten Kammern eines Bodens $P_{i+1}$ verbindet und eine zweite Parallelleitung die zweiten Kammern eines Bodens $P_i$ mit den vierten Kammern eines Bodens $P_{i+1}$ verbindet.

**40.** Verwendung der Vorrichtung nach einem der Ansprüche 25 bis 39 zur Trennung wenigstens eines aromatischen Isomers mit acht Kohlenstoffatomen in einem Gemisch aus Xylolen und Ethylbenzol.

**Claims**

**1.** Process for chromatographic separation of a feedstock in a simulated fluid bed device that includes a number of beds (A1 to An) of a solid or adsorbent that are contained in at least one chromatographic column, a fluid distributor plate ($P_i$) between each bed, whereby each distributor plate is divided into a number of sectors (P10, P11, P12), whereby each distributor plate sector (Pi) includes at least one distribution chamber (13) that is pierced with openings (18) and a fluid circulation space (8) in the vicinity of said openings of the chamber, and whereby said chamber is connected to a transfer line (10) that extends between the chamber and a point that is located outside of the column; during a period T of the cycle, an injection of the feedstock, a draw-off of a refined product, injection of desorbant, and draw-off of an extract into and from a distribution chamber that belongs to different plates are carried out, with the process being **characterized in that**, at an appropriate flow rate, a fluid volume is permanently circulated that circulates in the column in a bypass line (L1, 2) that connects the chambers of a distributor plate $P_i$ to the chambers of another downstream distributor plate $P_{i+j}$, at least one bed away, for at least one period T of the cycle, whereby period T corresponds to the circulation period of the fluid in an adsorbent bed, whereby said distribution chambers receive, during said period, neither feedstock injection or desorbant injection nor the draw-off of a refined product or an extract, and whereby the fluid flow circulating in the bypass line and in the chambers is adjusted in such a way that said circulation chambers are flushed by a fluid that has approximately the same composition as that of the fluid that circulates through the circulation space at each of plate chambers $P_i$ and $P_{i+j}$.

**2.** Process according to claim 1, wherein said distributor plate chambers are separated by an adsorbent bed.

**3.** Process according to claim 1 or 2, wherein the flow rate of fluid that circulates in the bypass line is the quotient of the volume that is available in the distribution chambers in question and the bypass line, divided by the period of the cycle, plus or minus 50% and preferably plus or minus 15%.

**4.** Process according to one of claims 1 to 3, wherein said distributor plate chambers are separated by two adsorbent beds.

**5.** Process according to claim 4, wherein the flow of fluid that circulates in the bypass line is the quotient of the volume that is available in the distribution chambers and the bypass line, divided by twice the period of the cycle, plus or minus 50% and preferably plus or minus 15%.

**6.** Process according to one of claims 1 to 5, wherein during one period, the flow of the fluid that circulates in the bypass line between distribution plates $P_i$ and $P_{i+1}$ is canceled when the chambers of distributor plate P receive the injection of feedstock or desorbant or any other fluid (flush-in) or the draw-off of refined product or extract or any other fluid (flush-out).

**7.** Process according to one of claims 1 to 5, wherein during the period of draw-off of an extract or a refined product, on a given distributor plate that includes only a single chamber per sector, the extract or the refined product of plate $P_i$ is drawn off, whereby the bypass flow is canceled by a non-return valve, and during the subsequent period, the extract or the refined product is drawn off from plate $P_{i+1}$ and plate $P_i$, whereby the circulation of fluid in the bypass line is reestablished.

**8.** Process according to one of claims 1 to 5 and 7, wherein during the injection period of feedstock or desorbant, a portion of the feedstock or desorbant is introduced into an appropriate plate $P_i$ via the by-

pass line and during the subsequent period, the entire feedstock is sent into subsequent distributor plate $P_{i+1}$, whereby the bypass flow is canceled by a non-return valve.

9. Process according to one of claims 1 to 5, wherein each distributor plate sector includes two distribution chambers (13a, 13b), a first that is intended for receiving a draw-off of extract or refined product and a second that is intended to receive an introduction of feedstock or desorbant and wherein, in addition to the periods for drawing off extract and refined product and for introducing feedstock and desorbant in said chambers, the fluid from the first chambers of a distributor plate $P_i$ is drawn off and is introduced, owing to the bypass line, into the second chambers of distributor plate $P_{i+1}$.

10. Process according to claim 9, wherein during one period, the extract or the refined product is drawn off from the first chambers of a plate $P_i$, the flow of the bypass line that supplies the second chambers of plate $P_{i+1}$ is canceled, and the fluid that comes from the first chambers of plate $P_{i-1}$ is introduced into two chambers of plate $P_i$ via the bypass line.

11. Process according to one of claims 1 to 5, wherein each distributor plate sector includes two distribution chambers, a first that is intended to receive a draw-off of extract and a second that is intended to receive an introduction of feedstock or desorbant or a draw-off of refined product, and wherein in addition to periods of draw-off of extract and refined product and of introduction of feedstock and desorbant in said chambers, the fluid is drawn off from the first chambers of a distributor plate $P_i$ and is introduced, owing to the bypass line, into the two chambers of distributor plate $P_{i+1}$.

12. Process according to claim 11, wherein, during one period, the extract is drawn off from the first chambers of a plate $P_i$, the flow of the bypass line that supplies the second chambers of plate $P_{i+1}$ is canceled, and the fluid that comes from the first chambers of plate $P_{i-1}$ is introduced into the second chambers of plate $P_i$ via the bypass line.

13. Process according to claim 11 or 12, wherein during one period, the refined product is drawn off from the second chambers of a plate $P_i$, the fluid is drawn off from the first chambers of plate $P_{i-1}$ via the bypass line between plates $P_{i-1}$ and $P_i$, and the fluid that comes from the first chambers of plate $P_i$ is introduced into the second chambers of plate $P_{i+1}$ via the bypass line between plates $P_i$ and $P_{i+1}$.

14. Process according to one of claims 9 to 13, wherein during one period of the cycle, feedstock or desorbant is introduced from the outside of the column into the second chambers of a plate $P_i$, the flow of fluid from the bypass line that supplies the second chambers of plate $P_i$ is canceled, and the fluid that is introduced into the second chambers of plate $P_{i+1}$ is drawn off from the first chambers of plate $P_i$ via the bypass line.

15. Process according to one of claims 1 to 5, wherein each distributor plate sector includes two distribution chambers, a first that is intended to receive a draw-off of. refined product or an introduction of desorbant and a second that is intended to receive an introduction of feedstock, desorbant or a draw-off of extract and wherein, in addition to periods of drawing off extract and refined product and of introducing feedstock and desorbant in said chambers, the fluid is drawn off from the first chambers of a distributor plate $P_i$ and is introduced, owing to the bypass line, into the second chambers of distributor plate $P_{i+1}$.

16. Process according to claim 15, wherein during one period, the refined product is drawn off from the first chambers of a plate $P_i$, the flow of the bypass line that supplies the second chambers of plate $P_{i+1}$ is canceled, and the fluid that comes from the first chambers of plate $P_{i-1}$ is introduced into the second chambers of plate $P_i$ via the bypass line.

17. Process according to one of claims 15 and 16, wherein during one period, the extract is drawn off from the second chambers of a plate $P_i$, the flow of the bypass line that supplies the second chambers of plate $P_i$ is canceled, and the fluid that comes from the first chambers of plate $P_i$ is introduced into the second chambers of plate $P_{i+1}$ via the bypass line.

18. Process according to one of claims 15 to 17, wherein during one period, the desorbant is introduced into the first chambers of a plate $P_i$, the flow of the bypass line that supplies the second chambers of plate $P_{i+1}$ is canceled, and the fluid that comes from the first chambers of plate $P_{i-1}$ is introduced into the second chambers of plate $P_i$ via the corresponding bypass line.

19. Process according to one of claims 15 to 18, wherein during one period, the feedstock is introduced into the second chambers of a plate $P_i$, the flow of the bypass line that supplies the second chambers of plate $P_i$ is canceled, and the fluid is drawn off from the first chambers of plate $P_i$ and is introduced, owing to the corresponding bypass line, into the second chambers of plate $P_{i+1}$.

20. Process according to one of claims 1 to 5, wherein each distributor plate sector includes four distribution chambers, a first that is intended to receive a draw-off of extract, a second that is intended to receive a draw-off of refined product, a third that is intended to receive an introduction of desorbant, and a fourth that is intended to receive an introduction of feedstock, and wherein the fluid is drawn off from the first chambers and second chambers of a distributor plate $P_i$ and is introduced into, respectively, the third and fourth chambers of plate $P_{i+1}$, in addition to periods of drawing off extract or refined product and introduction of desorbant or feedstock in said plate $P_1$.

21. Process according to one of claims 1 to 5 and 20, wherein during one period of the cycle, the extract is drawn off from the first chambers of a plate $P_i$ and the flow of fluid of the bypass line that supplies the third chambers of plate $P_{i+1}$ is canceled, whereby the other chambers receive fluid according to claim 20.

22. Process according to one of claims 1 to 5 and 20 and 21, wherein during one period of the cycle, the refined product is drawn off from the second chambers of a distributor plate $P_i$ and the flow of fluid of the bypass line that supplies the fourth chambers of plate $P_{i+1}$ is canceled, whereby the other chambers receive fluid according to claim 20.

23. Process according to one of claims 1 to 5 and 20 to 22, wherein during one period of the cycle, desorbant is introduced from the outside of the column into the third chambers of a plate $P_i$ and the flow of fluid of the bypass line that supplies the third chambers of plate $P_i$ is canceled, whereby the other chambers receive fluid according to claim 20.

24. Process according to one of claims 1 to 5, and 20 to 23, wherein, during one period of the cycle, the feedstock is introduced from the outside of the column into the fourth chambers of a plate $P_i$ and the flow of fluid of the bypass line that supplies the fourth chambers is canceled, whereby the other chambers receive fluid according to claim 20.

25. Device for chromatographic separation of a feedstock in a simulated fluid bed that includes at least one column that is filled with a solid or adsorbent, whereby the column includes a number of beds ($A_1$, $A_n$) and a fluid distributor plate $P_i$ between each bed, whereby each distributor plate is divided into a number of sectors ($P_{10}$, $P_{11}$, $P_{12}$) of distributor plates, whereby each distributor plate sector includes at least one distribution chamber (13) that is pierced with openings (18) and a fluid circulation space (8) in the vicinity of said openings of the chamber, whereby said chamber is connected to a transfer line (10) that extends between the chamber and a point that is located outside of the column, and whereby the device is **characterized in that** transfer line (10) relative to distribution chambers of a plate $P_i$ is connected by a bypass line ($L_{1,2}$) to transfer line (20) relative to the distribution chambers of another plate Pi+j that is arranged downstream (relative to the direction of advance of the switching of the transfer lines) and **in that** the bypass line includes means (14, 15, 16) for monitoring and adjusting the flow of fluid that circulates there, in such a way that the distribution chambers are flushed by a fluid that has roughly the same composition as that of the fluid that circulates through the circulation space at each of said chambers.

26. Device according to claim 25, wherein the means for monitoring and adjusting the flow of fluid include a nonreturn valve (16).

27. Device according to claim 25 or 26, wherein said means for monitoring and adjusting the flow of fluid include a means for measuring flow and a valve for adjusting flow, optionally slaved to the means for measuring flow.

28. Device according to one of claims 25 to 27, wherein the bypass line includes a pump (17).

29. Device according to one of claims 25 to 28, wherein the bypass line includes an all-or-nothing valve.

30. Device according to one of claims 25 to 29, wherein the transfer lines include sequential valves.

31. Device according to one of claims 25 to 29, wherein the transfer lines are connected to at least one rotary valve and wherein the bypass line is inside the rotary valve or outside of the latter.

32. Device according to one of claims 26 to 31, wherein the number of beds is even, the number of distributor plates $P_n$ is odd, bypass line ($L_{1,2}$) connects the distribution chambers of distributor plate $P_1$ to those of distributor plate $P_2$, where plate $P_2$ is located downstream plate $P_1$, bypass line ($L_{3,4}$) connects the distribution chambers of distributor plate $P_3$ to that of distributor plate $P_4$, where plate $P_4$ is located downstream plate $P_3$, and bypass line ($L_n$) connects the distribution chamber of distributor plate $P_n$ to recycling line (2, 4) of the main fluid of last bed $A_n$ to first bed $A_1$.

33. Device according to one of claims 25 to 31, wherein the number of beds is even, the number of distributor plates $P_n$ is odd, a bypass line connects the line for recycling the main fluid to the distribution chamber of distributor plate $P_1$, bypass line $L_{2,3}$ connects the distribution chambers of distributor plate $P_2$ to

those of distributor plate $P_3$, where plate $P_3$ is located downstream plate $P_2$, and bypass line ($L_{n-1,n}$) connects the distribution chambers of distributor plate $P_{n-1}$ to those of distributor plate $P_n$, where plate $P_n$ is located downstream plate $P_{n-1}$.

34. Device according to one of claims 25 to 31, wherein the number of beds is odd, the number of distributor plates $P_n$ is even, bypass line ($L_{1,2}$) connects the distribution chambers of distributor plate $P_1$ to those of distributor plate $P_2$, where plate $P_2$ is located downstream plate $P_1$, bypass line ($L_{3,4}$) connects the distribution chambers of distributor plate $P_3$ to those of distributor plate $P_4$, where plate $P_4$ is located downstream plate $P_3$, and bypass line ($L_{n-1,n}$) connects the distribution chambers of distributor plate $P_{n-1}$ to those of distributor plate $P_n$, where plate $P_n$ is located downstream plate $P_{n-1}$.

35. Device according to one of claims 25 to 31, wherein the bypass line connects the chambers of a plate $P_i$ to those of a plate $P_{i+2}$.

36. Device according to claim 35, wherein the bypass line connects the chambers of plate $P_1$ to those of plate $P_2$, where plate $P_2$ is located downstream plate $P_1$, or the chambers of plate $P_{n-1}$ to those of plate $P_n$, where plate $P_n$. is located downstream plate $P_{n-1}$.

37. Device according to one of claims 25 to 31, wherein each distributor plate sector $P_i$ includes two fluid distribution chambers (13a, 13b), a first that is suited for receiving a first fluid and a second that is suited for receiving a second fluid, and wherein a first bypass line ($L_{1,2}$) connects first chambers (13a) of a plate $P_i$ to second chambers (23a) of a plate $P_{i+1}$, and a second bypass line ($L_{2,3}$) connects first chambers (23b) of plate $P_{i+1}$ to second chambers (33b) of plate $P_{i+2}$ and so on.

38. Device according to one of claims 25 to 31, wherein each distribution plate sector $P_i$ includes two fluid distribution chambers (13a, 13b), a first that is suited for receiving a first fluid and a second that is suited. for receiving a second fluid, and wherein a first bypass line connects the first chambers of a plate $P_i$ to the first chambers of a plate $P_{i+1}$ and a second bypass line connects the second chambers of plate $P_i$ to the second chambers of plate $P_{i+1}$.

39. Device according to one of claims 25 to 31, wherein each distributor plate sector $P_i$ includes four fluid distribution chambers, a first that is suited for receiving a first fluid (extract), a second that is suited for receiving a second fluid (refined product,) a third that is suited for receiving a third fluid (desorbant), and a fourth that is suited for receiving a fourth fluid (feedstock), and wherein a first bypass line connects the first chambers of a plate $P_i$ to the third chambers of a plate $P_{i+1}$ and a second bypass line connects the second chambers of a plate $P_i$ to the fourth chambers of a plate $P_{i+1}$.

40. Use of the device according to one of claims 25 to 39 for the separation of at least one aromatic isomer with eight carbon atoms in a mixture of xylenes and ethylbenzene.

**FIG.1**

**FIG.2**

# FIG.3

**FIG.4**